# EUROPEAN PATENT APPLICATION

(11) **EP 2 587 438 A1**
(43) Date of publication of application: **01.05.2013**
(21) Application number: 12189534.6
(22) Date of filing: 23.10.2012
(51) Int. Cl.: G06Q 30/02

(54) **Video display system; server, information processing device and information processing program which are usable in the video display system; and video display method**

(30) Priority: 28.10.2011 JP 2011236765
(71) Applicant: NINTENDO CO., LTD., Minami-ku, Kyoto 601 (JP)
(72) Inventor: Kawai, Eizi, Kyoto, 601-8501 (JP); Watanabe, Atsushi, Kyoto, 601-8501 (JP)
(74) Representative: Lang, Johannes

(57) **Abstract**

A video display system includes a transmission server, an information processing device (game device), a first display device (TV), and a portable second display device (terminal device). The transmission server transmits video information including at least a combination of a video content selected by a selection instruction from the game device and advertisement information to the game device via a network. The game device receives the video information via the network. The game device also outputs the video content included in the received video information to the TV, and wirelessly transmits the advertisement information included in the video information to the terminal device. The TV displays the video content input from the game device. The terminal device displays the advertisement information received from the game device.

## Description

### BACKGROUND OF THE INVENTION

### Field of the Invention

The present invention relates to a video display system and the like (a video display system; a server, an information processing device and an information processing program which are usable in the video display system; and a video display method) for transmitting a video from a server or the like via a network and displaying the video on the side of a terminal.

### Description of the Background Art

Conventionally, there are systems for acquiring a video on the side of a terminal from a server via the Internet and displaying the video on the side of the terminal. In such a system, it is conceivable that, for example, a game device at home acquires a video content from the server by the Internet and causes a TV at home to display the video content.

Conventionally, it is not possible to present other information (e.g., advertisement information or additional information) to a user together with the video content.

Therefore, the present invention has an object of providing a video display system and the like which can present such other information to the user together with the video content.

### SUMMARY OF THE INVENTION

In order to solve the above-described problem, the present invention adopts the structures of (1) through (16) as follows.

### (1)

An example of the present invention is directed to a video display system including a transmission server, an information processing device, a first display device, and a portable second display device.
The transmission server transmits video information including at least a combination of a video content selected by a selection instruction from the information processing device and advertisement information to the information processing device via a network.
The information processing device includes a video information reception unit and an output unit. The video information reception unit receives the video information via the network. The output unit outputs the video content included in the received video information to the first display device and wirelessly transmits the advertisement information included in the video information to the second display device.
The first display device displays the video content input from the information processing device. The second display device displays the advertisement information received from the information processing device.

According to the configuration of (1), the video content and the advertisement information are transmitted from the transmission server. On the terminal side, two display devices are used, and thus the video content is displayed on one display device while the advertisement information is displayed on the other display device. Therefore, while the video content is being reproduced by the first display device, the advertisement information can be reproduced by the second display device. A user holding the second display device can view the advertisement information on the second display device at hand while viewing the video content on the first display device. According to the configuration of (1), the advertisement information can be displayed for the same time duration as the reproduction time duration of the video content. Therefore, the advertisement information can be presented to the user effectively, which can improve the advertizing effect. In addition, the advertisement information displayed on the second display device is not displayed on the first display device. Therefore, the advertisement information does not disturb the video content displayed on the first display device, and thus the video content can be presented to the user in an easy-to-view manner.

### (2)

The second display device may include an operating unit and an operation data transmission unit. The operating unit accepts an operation performed by a user. The operation data transmission unit transmits operation data representing an operation performed on the operating unit to the information processing device. In this case, the information processing device further includes an operation data acquisition unit and a video control unit. The operation data acquisition unit acquires the operation data. The video control unit performs control regarding reproduction and/or display of the video content on the first display device based on the operation data.

The "control regarding reproduction and/or display of the video content in the first display device" may be control on the reproduction of the video content performed in the information processing device or may be control on the display and/or the reproduction performed by the second display device which displays the video content.

According to the configuration of (2), the user can perform an operation on the video content by use of the second display device. Owing to this, the user views the second display device when performing an operation on the video content. At this point, it is possible to direct the user's attention also to the advertisement information displayed on the second display device. Namely, according to the configuration of (2), an operation on the video content is allowed to be performed by use of the second display device (which displays the advertisement information). Owing to this, it is possible to direct the user's attention also to the advertisement information displayed on the second display device during the reproduction of the video content. This can improve the advertizing effect of the advertisement information.

### (3)

In the case where the video content is displayed on the first display device, the second display device may display an operation image regarding an operation performed on the operating unit together with the advertisement information.

According to the configuration of (3), the user views the operation image when performing an operation on the video content. Therefore, it is possible to direct the user's attention also to the advertisement information displayed on the second display device together with the operation image. In this manner, the operation image is displayed on the second display device, and thus the advertizing effect of the advertisement information can be further improved.

### (4)

The operating unit may include a touch panel provided on a screen of the second display device.

According to the configuration of (4), the user can perform an operation perceptively and easily. When performing an operation by use of the touch panel, the user views the operation image. Therefore, it is possible to direct the user's attention to the advertisement information displayed together with the operation image, with certainty. This can improve the advertizing effect of the advertisement information.

### (5)

The first display device may receive a control signal, generated in accordance with an operation performed by the user on the second display device, from the second display device or from the information processing device, and may operate in accordance with the control signal.

According to the configuration of (5), the user can perform an operation on the first display device by use of the second display device. Owing to this, the user views the second display device when performing an operation on the first display device. At this point, it is possible to direct the user's attention also to the advertisement information displayed on the second display device. In this manner, it is possible to direct the user's attention also to the advertisement information displayed on the second display device during the reproduction of the video content by the first display device. This can improve the advertizing effect of the advertisement information.

### (6)

The information processing device may further include a transmission information acquisition unit and an information transmission unit. The transmission information acquisition unit acquires transmission information representing an attribute of a user and/or a current state. The information transmission unit transmits the transmission information to the transmission server.
In this case, the transmission server determines advertisement information to be transmitted to the information processing device, which is an addressee of the received transmission information, based on the transmission information.

According to the configuration of (6), the transmission server can present the viewer with the advertisement information corresponding to the attribute of the viewer of the video content or the current state. Owing to this, appropriate advertisement information corresponding to the age, the district of residence or the like of the viewer is presented, or appropriate advertisement information corresponding to, for example, the time when the video content is to be viewed is presented. Thus, the effect of advertisement can be improved.

### (7)

The transmission server may transmit the video information further including a reproduction control instruction regarding reproduction of the advertisement information. In this case, the information processing device further includes an advertisement control unit for controlling reproduction of the advertisement information by the second display device in accordance with the reproduction control instruction included in the video information.

According to the configuration of (7), the video information including the reproduction control instruction is transmitted by the transmission server, and thus the reproduction of the advertisement information by the second display device can be controlled more easily on the side of the transmission server. According to the configuration of (7), for example, the reproduction of the advertisement information can be controlled easily as described in (8) or (9) below.

### (8)

The advertisement control unit may perform control such that predetermined advertisement information having a shorter reproduction time duration than that of the video content to be reproduced by the first display device is reproduced in repetition.

According to the configuration of (8), the moving image of the advertisement information is reproduced by the second display device in repetition, and thus the advertizing effect can be improved. In addition, the use of the reproduction control instruction can reduce the amount of data of the video information to be transmitted from the transmission server because the advertisement information to be reproduced in repetition does not need to be transmitted from the transmission server in an overlapping manner.

### (9)

The advertisement control unit may control the reproduction of the advertisement information by the second display device such that the predetermined advertisement information is reproduced by the second display device at a timing when a specific content of the video content reaches a predetermined state.

According to the configuration of (9), desirable advertisement information can be displayed on the second display device at a desired timing in accordance with the specific content of the video content. Owing to this, the advertisement information is presented to the user at an appropriate timing, and thus the advertizing effect can be improved. For example, a predetermined advertisement can be reproduced by the second display device at a timing when the user's attention is assumed to be diverged from the video content displayed on the first display device. Owing to this, it is possible to cause the user to notice the advertisement easily, which can improve the advertizing effect of the predetermined advertisement. Alternatively, for example, at a timing when a content related to a predetermined advertisement is reproduced by the first display device as the video content, the predetermined advertisement can be reproduced by the second display device. Owing to this, at a timing when the user wishes to view (obtain more detailed information), such detailed information can be provided to the user. Thus, the advertizing effect of the advertisement can be improved.

### (10)

The output unit wirelessly may wirelessly transmit the advertisement information to the second display device such that advertisement information having a content in accordance with a specific content of the video content to be reproduced by the first display device is reproduced by the second display device.

According to the configuration of (10), the advertisement information related to the specific content of the video content to be reproduced by the first display device is reproduced by the second display device. Therefore, the advertisement information can be presented to the user at a timing when the user wishes to view (obtain more detailed information). Thus, the advertizing effect of the advertisement can be improved.

### (11)

The transmission server may perform streaming transmission of the video content and the advertisement information including a moving image to the information processing device. In this case, output unit outputs the video content received in succession by the video information reception unit to the first display device in succession, and transmits the advertisement information received in succession by the video information reception unit to the second display device in succession.

According to the configuration of (11), the transmission server can transmit the moving image of the advertisement information easily at an appropriate timing in accordance with the specific content of the video content. Owing to this, the video content and the advertisement information suitable thereto can be presented to the user (viewer) at the same time, which can further improve the advertizing effect.

### (12)

The video content may be a video of a TV program which is planned to be broadcast, which is being broadcast, or which has been broadcast.

According to the configuration of (12), the TV program by TV broadcasting is provided to the user as the video content, and thus the content of the TV broadcasting (TV program) can be provided to a larger number of viewers. In the case where a program which the user has missed is provided as the video content, it is possible to motivate the user who has viewed such a program to view TV broadcasting relating to the program which he/she missed. Specifically, the video display system provides the user who has missed one episode of a serial drama in TV broadcasting with the one episode. This can motivate the user to view the continuation of the drama.

### (13)

Another example of the present invention is directed to a video display system including a transmission server, an information processing device, a first display device, and a portable second display device.
The transmission server performs streaming transmission of video information including at least a combination of a video content of a TV program selected by a selection instruction from the information processing device, advertisement information and a reproduction control instruction regarding reproduction of the advertisement information to the information processing device via a network.
The information processing device includes a video information reception unit and an output unit. The video information reception unit receives the video information in succession via the network. The output unit outputs the video content included in the video information received in succession to the first display device in succession, and wirelessly transmits the advertisement information included in the video information to the second display device in succession.
The first display device displays the video content input from the information processing device.
The second display device includes a display unit, an operating unit, and an operation data transmission unit. The display unit displays the advertisement information received from the information processing device. The operating unit accepts an operation performed by a user. The operating data transmission unit transmits operation data representing an operation performed on the operating unit to the information processing device.
The information processing device further includes a control unit for performing control regarding reproduction and/or display of the video content on the first display device based on the operation data. The output unit wirelessly transmits the advertisement information in accordance with the reproduction control instruction such that, at a timing when a specific content of the video content displayed on the first display device reaches a predetermined state, predetermined advertisement information related to the specific content is reproduced by the second display device.

According to the configuration of (13), substantially the same effect as that of (1), (2), (10), (11) and (12) can be provided.

### (14)

Still another example of the present invention is directed to a video display system including a transmission server, a first display device, and a portable second display device. The transmission server transmits video information including at least a combination of a video content selected by a selection instruction and advertisement information to the first display device and the second display device via a network. The first display device displays the received video content. The second display device displays the received advertisement information in association with the display of the video content.

According to the configuration of (14), as according to the configuration of (1), the video content in the video information transmitted from the transmission server is displayed on the first display device, and the advertisement information in the video information is displayed on the second display device in association with the display of the video content. Therefore, as according to the configuration of (1), the advertisement information can be presented to the user effectively, which can improve the advertizing effect. In addition, the video content displayed on the first display device can be presented to the user in an easy-to-see manner.

### (15)

Still another example of the present invention is directed to a video display system communicable with a transmission server via a network.
The transmission server transmits video information including at least a combination of a video content selected by a selection instruction from an information processing device and advertisement information to the information processing device via a network.
The video display system includes a video information reception unit and an output unit. The video information reception unit receives the video information via the network. The output unit outputs the video content included in the received video information to a first display device and causing the video content to be displayed, and wirelessly transmitting the advertisement information included in the video information to a portable second display device and causing the advertisement information to be displayed.

According to the configuration of (15), as according to the configuration of (1), the video content in the video information transmitted from the transmission server is displayed on the first display device, and the advertisement information in the video information is displayed on the second display device. Therefore, as according to the configuration of (1), the advertisement information can be presented to the user effectively, which can improve the advertizing effect. In addition, the video content displayed on the first display device can be presented to the user in an easy-to-see manner.

### (16)

In the above-described video display system, the transmission server may transmit video information including at least a combination of a video content and related information related to the video content, instead of the advertisement information, to the information processing device via a network. In this case, the output unit outputs the video content included in the received video information to the first display device and wirelessly transmits the related information included in the video information to the second display device. The second display device displays the related information received from the information processing device.

According to the configuration of (16), the video content in the video information transmitted from the transmission server is displayed on the first display device, and the related information in the video information is displayed on the second display device. Therefore, the related information can be displayed for the same time duration as the reproduction time duration of the video content. Thus, a larger amount of information regarding the video content can be presented to the user. In addition, according to the configuration of (16) also, as according to configuration of (1), the related information displayed on the second display device is not displayed on the first display device. Therefore, the related information does not disturb the video content displayed on the first display device, and thus the video content can be presented to the user in an easy-to-view manner.

Still another example of the present invention may be directed to a server device having the same functions as those of the transmission server included in the video display system according to any of (1) through (16), an information processing device having the same functions as those of the information processing device included in the video display system, or an information processing program which causes a computer to function as means equivalent to the units of the information processing device. Still another example of the present invention may be in the form of a video display method which is carried out by the video display system.

As described above, according to the present invention, predetermined information (advertisement information and/or related information) is transmitted from the transmission server together with the video content, and the video content is displayed on one of the display devices while the predetermined information is displayed on the other display device. Thus, the predetermined information can be presented effectively together with the video content.

These and other objects, features, aspects and advantages of the present invention will become more apparent from the following detailed description when taken in conjunction with the accompanying drawings.

### BRIEF DESCRIPTION OF THE DRAWINGS

FIG. 1 is a block diagram showing an example video display system;
FIG. 2 is a block diagram showing a configuration of an example transmission server;
FIG. 3 is an external view of an example game system;
FIG. 4 is a block diagram showing an internal configuration of an example game device;
FIG. 5 is a perspective view showing an external configuration of an example controller;
FIG. 6 is a perspective view showing an external configuration of an example controller;
FIG. 7 is a block diagram showing an configuration of an example controller;
FIG. 8 provides diagrams showing an external configuration of an example terminal device;
FIG. 9 is a diagram showing an external configuration of an example terminal device;
FIG. 10 is a block diagram showing an internal configuration of an example terminal device;
FIG. 11 shows an example of data stored on a storage unit of the game device (including an external main memory, an internal main memory, and a flash memory);
FIG. 12 is a main flowchart showing an example of process flow executable by the game device in an example embodiment;
FIG. 13 is a main flowchart showing an example of process flow executable by a transmission server in the example embodiment;
FIG. 14 is a flowchart showing an example of reproduction control process (step 5) shown in FIG. 12 in detail;
FIG. 15 shows an example of specific content reproduced by a TV and a terminal device;
FIG. 16 shows an example of reproduction operation image; and
FIG. 17 shows an example of TV operation image.

### DESCRIPTION OF THE PREFERRED EMBODIMENTS

### [1. Overall configuration of video display system]

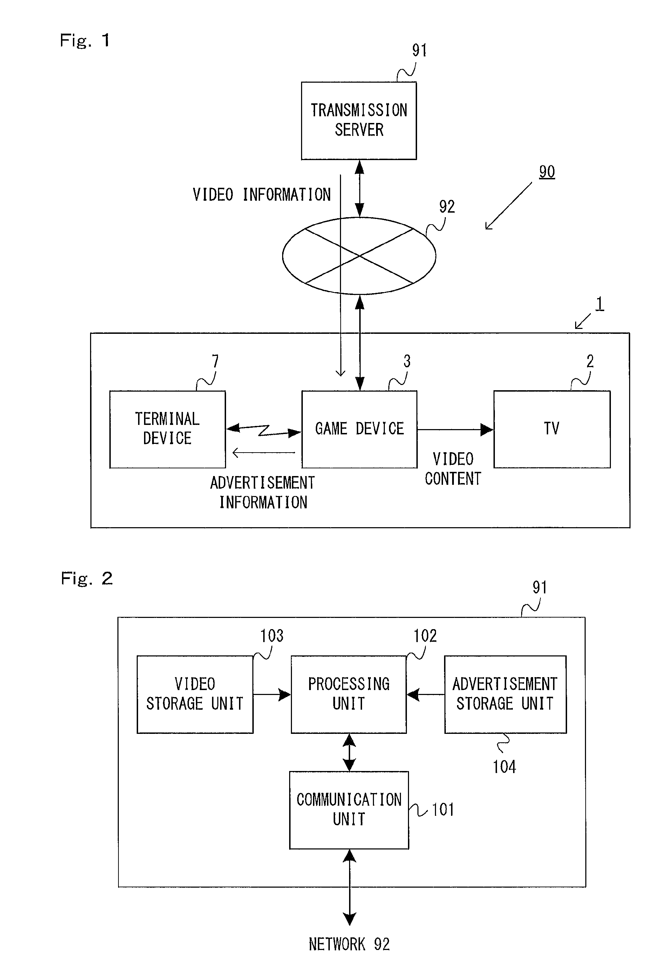

Hereinafter, an example of a video display system according to an example embodiment of the present invention will be described with reference to the drawings. FIG. 1 is a block diagram showing an example of video display system according to the example embodiment. As shown in FIG. 1, a video display system 90 includes a server-side transmission server 91 and a terminal-side game system 1. The transmission server 91 and the game system 1 are mutually communicable via a network 92 such as, for example, the Internet or the like. In the example embodiment, the video display system 90 displays a video content and advertisement information transmitted from the transmission server 91 separately on two display devices in the game system 1. Owing to this, the video content and the advertisement information can be presented to a user (viewer) effectively.

The transmission server 91 transmits video information to a game device 3 via the network 92. In the example embodiment, the video information is information including at least a combination of the video content and the advertisement information. The video content is a moving image to be presented to the user and is displayed on a predetermined display device (in the example embodiment, TV 2) in the game system 1. The video content may be any content, and may be, for example, a TV program, a film or the like. The TV program transmitted as the video content may be a program planned to be broadcast, a program which is being broadcast, or a program which has been broadcast. In the example embodiment, the video content which has been selected by a selection instruction from the game system 1 (selected by the user) is transmitted from the transmission server 91 to the game system 1. FIG. 1 shows one transmission server 1, but the game system 1 may be capable of accessing a plurality of transmission servers. The video display system 90 may include a plurality of game systems 1.

The advertisement information is information including an image to be presented to the user together with the video content. The advertisement information is displayed on a portable display device (in the example embodiment, terminal device 7) in the game system 1. The advertisement information may be specifically any information, and typically, is an image which advertizes a product or a service. The advertisement information may be, for example, a moving image such as a commercial included in a TV program or a still image. The advertisement information is not limited to only to a moving image or a still image, and may be an image, the displayed content of which is operated (changed) by the user such as, for example, an image on a web page, a game image or the like. The advertisement information may be on a product or a service which is irrelevant to the video content, or may be on the video content itself. For example, the advertisement information may be a version for sample viewing of the video content (typically, in the case where the video content itself is charged).

The game system 1 receives the video information via the network 92. The game system 1 outputs the video content included in the received video information to one of the display devices (TV 2) to be displayed, and also outputs the advertisement information included in the video information to the other portable display device (terminal device 7) to be displayed.

The game system 1 may include any devices. In the example embodiment, as shown in FIG. 1, the game system 1 includes the game device 3 as an example of information processing device, the TV 2 as an example of display device, and the terminal device 7 as an example of portable display device. In other embodiments, the game device 3 and the TV 2 may be integral with each other. Namely, the game system 1 may include an information processing device having a function of receiving the video information and a function of displaying the video content. In still other embodiments, the game device 3 and the terminal device 7 may be integral with each other. Namely, the game system 1 may include an information processing device (may or may not be portable) having a function of receiving the video information and a function of displaying the advertisement information.

In the example embodiment, the game device 3 receives the video information from the transmission server 91. The video content included in the video information is output to the TV 2. The TV 2 displays the video content input from the game device 3. The advertisement information included in the video information is output to the terminal device 7. The terminal device 7 displays the advertisement information received from the game device 3. In the example embodiment, the communication between the game device 3 and the TV 2 is wired communication. In other embodiments, the communication between the game device 3 and the TV 2 may be wireless communication. In the example embodiment, the communication between the game device 3 and the terminal device 7 is wireless communication. In other embodiments, the communication between the game device 3 and the terminal device 7 may be wired communication.

As described above, in the video display system 90 according to the example embodiment, the video content and the advertisement information are transmitted from the transmission server 91, and the game system 1 uses two display devices to display the video content on one of the display devices (TV 2) and display the advertisement information on the other display device (terminal device 7). Therefore, according to the example embodiment, while the video content is being reproduced by the TV 2, the advertisement information can be reproduced by the terminal device 7. The user having the terminal device 7 can view the advertisement information on the terminal device 7 at hand while viewing the video content on the TV 2. According to the example embodiment, the advertisement information can be displayed for the same time duration as the reproduction time duration of the video content. Therefore, the advertisement can be presented to the user effectively and thus the advertizing effect can be improved. Also, according to the example embodiment, the advertisement information displayed on the terminal device 7 is not displayed on the TV 2. Therefore, the advertisement information does not block the video content displayed on the TV 2, and thus the video content can be presented to the user in an easy-to-view manner.

### [2. Configuration of transmission server]

Hereinafter, a configuration of the transmission server 91 will be described. FIG. 2 is a block diagram showing an example of structure of the transmission server 91. As shown in FIG. 2, the transmission server 91 includes a communication unit 101, a processing unit 102, a video storage unit 103, and an advertisement storage unit 104. The transmission server 91 may have any structure which is communicable with an external device (game system 1, etc.) via the network 92 and has a function of transmitting video information in response to an acquisition request from the external device. For example, the transmission server 91 includes one or more information processing devices. For example, the video storage unit 103 and the advertisement storage unit 104 may be included in different servers. In such a case, the entirety of the servers will be referred to as a "transmission server".

The communication unit 101 is communicable with the network 92, and performs data transmission and reception via the network 92 to and from the external device. Data received from the external device is output to the processing unit 102 by the communication unit 101. Data input to the communication unit 101 from the processing unit 102 is transmitted to the external device by the communication unit 101 via the network 92.

The processing unit 102 is an information processing unit for executing information processing in the transmission server 91. The processing unit 102 includes a CPU, a memory and the like for executing the information processing. In the example embodiment, the processing unit 102 generates the video information in response to an acquisition request from the external device (game system 1) and transmits the video information to the external device via the communication unit 101. Processes executed by the processing unit 102 will be described later in more detail.

The video storage unit 103 is a storage unit for storing (saving) data of the video content. The video content stored on the video storage unit 103 is read by the processing unit 102 when appropriate and is transmitted to the external device as the video information. The advertisement storage unit 104 is a storage unit for storing (saving) the advertisement information. The advertisement information stored on the advertisement storage unit 104 is read by the processing unit 102 when appropriate and is transmitted to the external device as the video information.

### [3. Overall configuration of game system]

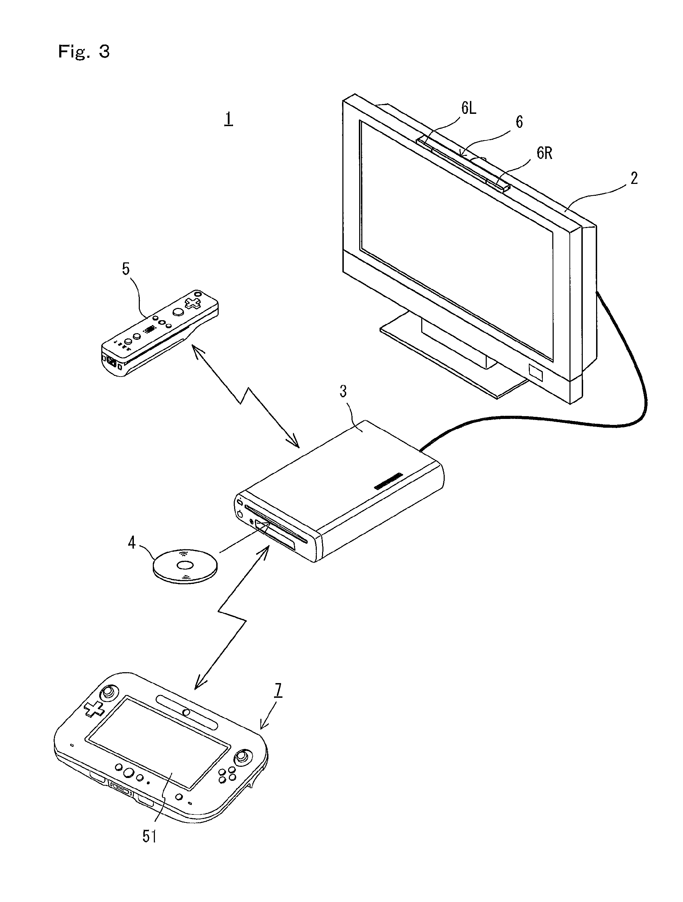

Hereinafter, a configuration of the game system will be described. FIG. 3 is an external view of an example game system. As shown in FIG. 3, a game system 1 includes a stationary display device 2 such as a TV receiver or the like (hereinafter, referred to as the "TV 2"), a stationary game device 3, an optical disc 4, a controller 5, a marker device 6, and a terminal device 7. In the game system 1, the game device 3 executes a game process based on a game operation performed using the controller 5 and/or the terminal device 7, and a game image obtained through the game process is displayed on the TV 2 and/or the terminal device 7. In other embodiments, the game system 1 may include an information processing device which does not have a function of executing game processes, instead of the game device 3. Alternatively, the game system 1 may not include the optical disc 4, the controller 5, or the marker device 6.

In the game device 3, the optical disc 4, which is an example of information storage medium used for the game device 3 in a replaceable manner, is removably inserted. An information processing program (typically, game program) to be executed by the game device 3 is stored on the optical disc 4. The game device 3 has, on a front surface thereof, an insertion opening for the optical disc 4. The game device 3 reads and executes the information processing program stored on the optical disc 4 which is inserted into the insertion opening, to execute the game process.

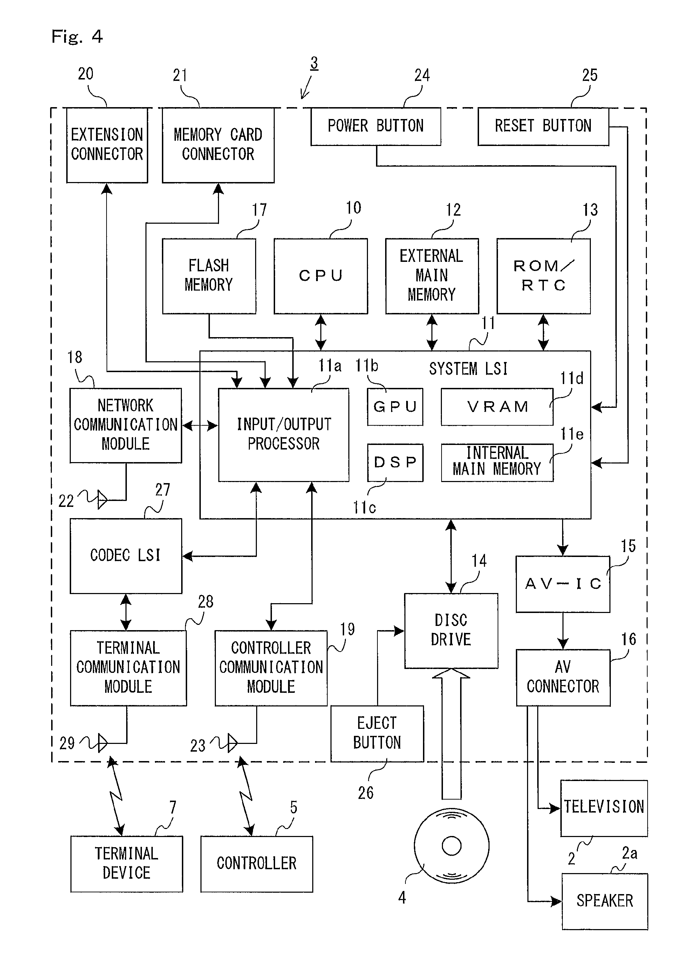

The TV 2, which is an example of predetermined display device, is connected to the game device 3 by a connecting cord. The TV 2 is a stationary display device having a larger screen than a display unit (LCD 51) of the terminal device 7. The TV 2 displays an image output from the game device 3. The TV 2 includes a speaker 2a (FIG. 4) for outputting a sound which is output from the game device 3.

The marker device 6 is provided along a periphery of the screen (on the upper side with respect to the screen in FIG. 3) of the TV 2. A user (player) can perform a game operation by moving the controller 5, the details of which will be described later, and the marker device 6 is used by the game device 3 for calculating the movement, position, attitude, etc. of the controller 5. The marker device 6 includes two markers 6R and 6L on opposite ends thereof. Specifically, the marker 6R (as well as the marker 6L) includes one or more infrared LEDs (Light Emitting Diodes), and emits infrared light in a forward direction from the TV 2. The marker device 6 is connected to the game device 3 in a wired connection (or a wireless connection), and the game device 3 can control lighting of each infrared LED of the marker device 6. The marker device 6 is portable so that the user can install the marker device 6 in any desired position. While FIG. 3 shows an embodiment in which the marker device 6 is arranged on top of the TV 2, the position and the direction of arranging the marker device 6 are not limited to this particular arrangement.

The controller 5 provides the game device 3 with operation data representing a content of an operation performed on the controller 5 itself. The controller 5 and the game device 3 can wirelessly communicate with each other. In other example embodiments, the controller 5 and the game device 3 may be connected in a wired manner. While FIG. 3 shows only one controller 5 included in the game system 1, the game system 1 may include a plurality of controllers 5.

The terminal device 7 is portable and is of a size that can be held by the user. In use, the user can hold and move the terminal device 7 or can place the terminal device 7 in any desired position. As will be described in detail later, the terminal device 7 includes an LCD (Liquid Crystal Display) 51, and an input unit (touch panel 52. gyrosensor 74, etc. to be described later). The terminal device 7 can communicate with the game device 3 wirelessly (or in a wired manner). The terminal device 7 receives data on an image (e.g., advertisement image) transmitted from the game device 3, and displays the image on the LCD 51. In the example embodiment, the LCD is used as the display device, but the terminal device 7 may include any other display device such as a display device utilizing EL (Electro Luminescence) or the like. The terminal device 7 also transmits operation data representing a content of an operation performed thereon to the game device 3.

### [4. Internal configuration of game device 3]

Now, an internal configuration of the game device 3 will be described with reference to FIG. 4. FIG. 4 is a block diagram illustrating an internal configuration of the example game device 3. The game device 3 includes a CPU (Central Processing Unit) 10, a system LSI 11, an external main memory 12, a ROM/RTC 13, a disc drive 14, an AV-IC 15, and the like.

The CPU 10 executes a game process by executing a game program stored on the optical disc 4, and functions as a game processor. The CPU 10 is connected to the system LSI 11. The external main memory 12, the ROM/RTC 13, the disc drive 14, and the AV-IC 15, as well as the CPU 10, are connected to the system LSI 11. The system LSI 11 performs a process of controlling data transmission between the respective components connected thereto, generating an image to be displayed, obtaining data from an external device(s), or the like. The internal configuration of the system LSI 11 will be described below. The external main memory 12 is of a volatile type and stores a program such as a game program read from the optical disc 4, a game program read from a flash memory 17 or the like, and various data. The external main memory 12 is used as a work area or a buffer area for the CPU 10. The ROM/RTC 13 includes a ROM (so-called boot ROM) incorporating a boot program for the game device 3, and a clock circuit (RTC: Real Time Clock) for counting time. The disc drive 14 reads program data, texture data, or the like from the optical disc 4, and writes the read data into an internal main memory 11e (to be described below) or the external main memory 12.

The system LSI 11 includes an input/output processor (I/O processor) 11a, a GPU (Graphics Processor Unit) 11b, a DSP (Digital Signal Processor) 11c, VRAM (Video RAM) 11d, and the internal main memory 11e. Although not shown in the figures, these components 11a through 11e are connected with each other through an internal bus.

The GPU 11b, acting as a part of rendering means, generates an image in accordance with a graphics command (rendering instruction) from the CPU 10. The VRAM 11d stores data (data such as polygon data, texture data or the like) used by the GPU 11b to execute a graphics command. For generating an image, the GPU 11b generates image data using data stored on the VRAM 11d. In the example embodiment, the game device 3 generates both of an image to be displayed on the TV 2 and an image to be displayed on the terminal device 7. Hereinafter, the image to be displayed on the TV 2 may be referred to as a "TV image" and the image to be displayed on the terminal device 7 may be referred to as a "terminal image".

The DSP 11c, functioning as an audio processor, generates sound data using sound data or sound waveform (e.g., tone quality) data stored on the internal main memory 11e or the external main memory 12. In the example embodiment, sounds (game sounds) to be generated are classified into two types as in the case of the game images, one being output by the speaker of the TV 2 and the other being output by speakers of the terminal device 7. Hereinafter, the sound to be output by the TV 2 may be referred to as a "TV sound", and the sound to be output by the terminal device 7 may be referred to as a "terminal sound".

Among the images and sounds generated by the game device 3 as described above, data on the image and data on the sound to be output by the TV 2 are read out by the AV-IC 15. The AV-IC 15 outputs the read-out image data to the TV 2 via an AV connector 16, and outputs the read-out sound data to the speaker 2a built in the TV 2. Thus, the image is displayed on the TV 2, and the sound is output by the speaker 2a. While the connection scheme between the game device 3 and the TV 2 may be any scheme, the game device 3 may transmit a control command for controlling the TV 2 to the TV 2 via a wired connection or a wireless connection. For example, an HDMI (High-Definition Multimedia Interface) cable in conformity with the HDMI standard may be used. According to the HDMI standard, it is possible to control the connected device by a function called CEC (Consumer Electronics Control). Thus, in the case where the game device 3 can control the TV 2, as when an HDMI cable is used, the game device 3 can turn on the power of the TV 2 or switch the input of the TV 2 from one to another at an appropriate timing.

Among the images and sounds generated by the game device 3, data on the image and data on the sound to be output by the terminal device 7 are transmitted to the terminal device 7 by the input/output processor 11a, etc. The data transmission to the terminal device 7 by the input/output processor 11a, etc., will be described later.

The input/output processor 11a exchanges data with components connected thereto, and downloads data from an external device(s). The input/output processor 11a is connected to the flash memory 17, a network communication module 18, a controller communication module 19, an extension connector 20, a memory card connector 21, and a codec LSI 27. An antenna 22 is connected to the network communication module 18. An antenna 23 is connected to the controller communication module 19. The codec LSI 27 is connected to a terminal communication module 28, and an antenna 29 is connected to the terminal communication module 28.

The game device 3 can be connected to the network 92 such as the Internet or the like to communicate with an external information processing device (e.g., any of various types of servers such as the transmission server 91 or the like). Specifically, the input/output processor 11a can be connected to a network such as the Internet or the like via the network communication module 18 and the antenna 22, and can communicate with other information processing devices connected to the network. The input/output processor 11a regularly accesses the flash memory 17, and detects the presence or absence of any data to be transmitted to the network. When such data is detected, the input/output processor 11a transmits the data to the network 92 via the network communication module 18 and the antenna 22. Further, the input/output processor 11a receives data transmitted from an external information processing device and data downloaded from a download server, via the network, via the antenna 22 and via the network communication module 18, and stores the received data on the flash memory 17. The CPU 10 executes a game program to read data stored on the flash memory 17 and to use the data in the game program. The flash memory 17 may store saved game data (e.g., game result data or unfinished game data) of a game played using the game device 3 in addition to data exchanged between the game device 3 and an external information processing device. The flash memory 17 may also have a game program stored thereon.

The game device 3 can receive operation data from the controller 5. Specifically, the input/output processor 11a receives operation data transmitted from the controller 5 via the antenna 23 and the controller communication module 19, and stores (temporarily stores) the operation data in a buffer area of the internal main memory 11e or the external main memory 12.

The game device 3 can exchange image data, sound data or any other data with the terminal device 7. For transmitting an image (terminal image) to the terminal device 7, the input/output processor 11a outputs data on an image generated by the GPU 11b to the codec LSI 27. The codec LSI 27 performs a predetermined compression process on the image data from the input/output processor 11a. The terminal communication module 28 wirelessly communicates with the terminal device 7. Accordingly, the image data compressed by the codec LSI 27 is transmitted by the terminal communication module 28 to the terminal device 7 via the antenna 29. The transmission of the image data from the game device 3 to the terminal device 7 may be performed such that delay is avoided as much as possible. Therefore, in the example embodiment, the codec LSI 27 compresses the image data using a compression technology with high efficiency such as, for example, the H.264 standard. Other compression technologies may be used, or the image data may be transmitted uncompressed if the communication speed is sufficiently high. The terminal communication module 28 is, for example, a Wi-Fi certified communication module, and may perform wireless communication at high speed with the terminal device 7 using a MIMO (Multiple Input Multiple Output) technology employed in, for example, the IEEE 802.11n standard, or may use other communication schemes.

In addition to the image data, the game device 3 also transmits sound data to the terminal device 7. Specifically, the input/output processor 11a outputs the sound data generated by the DSP 11c to the terminal communication module 28 via the codec LSI 27. The codec LSI 27 performs a compression process on the sound data as it does on the image data. The method of compressing the sound data may be any method. In other embodiments, the sound data may be transmitted uncompressed. The terminal communication module 28 transmits such compressed image data and sound data to the terminal device 7 via the antenna 29.

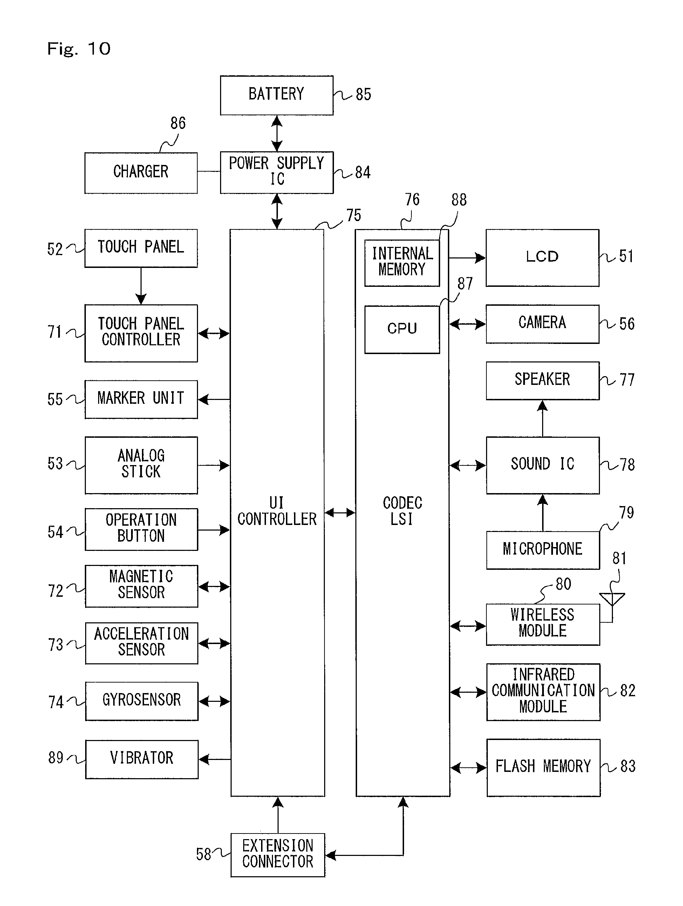

In addition to the image data and the sound data, the game device 3 transmits various types of control data (referred to as "terminal control data") to the terminal device 7 when necessary. The terminal control data is data representing an instruction to control a component included in the terminal device 7, for example, an instruction to control lighting of a marker unit (marker unit 55 shown in FIG. 10) or an instruction to control image capturing by a camera (camera 56 shown in FIG. 10). The input/output processor 11a transmits the terminal control data to the terminal device 7 in accordance with an instruction from the CPU 10. In the example embodiment, the codec LSI 27 does not perform a compression process on the terminal control data, but in other embodiments, the codec LSI 27 may perform a compression process. The data to be transmitted from the game device 3 to the terminal device 7 may be encrypted when necessary or may not be encrypted.

The game device 3 can receive various types of data from the terminal device 7. As will be described in detail later, in the example embodiment, the terminal device 7 transmits operation data, image data, and sound data. The data transmitted by the terminal device 7 is received by the terminal communication module 28 via the antenna 29. Here, the image data and the sound data from the terminal device 7 have been subjected to the same compression process as performed on the image data and the sound data transmitted from the game device 3 to the terminal device 7. Accordingly, the image data and the sound data are transferred from the terminal communication module 28 to the codec LSI 27, and subjected to a decompression process by the codec LSI 27 before being output to the input/output processor 11a. Meanwhile, the operation data from the terminal device 7 is smaller in size than the image data or the sound data and therefore may not be subjected to a compression process. The operation data may be encrypted when necessary or may not be encrypted. Accordingly, after being received by the terminal communication module 28, the operation data is output to the input/output processor 11a via the codec LSI 27. The input/output processor 11a stores (temporarily stores) the data received from the terminal device 7 in a buffer area of the internal main memory 11e or the external main memory 12.

The game device 3 can be connected to other devices or external storage mediums. Specifically, the input/output processor 11a is connected to the extension connector 20 and the memory card connector 21. The extension connector 20 is a connector for an interface, such as a USB or SCSI interface. The extension connector 20 can be connected to a medium such as an external storage medium, a peripheral device such as another controller, or a wired communication connector, and thus can communicate with a network in place of the network communication module 18. The memory card connector 21 is a connector for connecting thereto an external storage medium such as a memory card. For example, the input/output processor 11a can access an external storage medium via the extension connector 20 or the memory card connector 21 to store data on the external storage medium or read data from the external storage medium.

The game device 3 includes a power button 24, a reset button 25, and an eject button 26. The power button 24 and the reset button 25 are connected to the system LSI 11. When the power button 24 is turned on, power is supplied from an external power source to the components of the game device 3 via an AC adaptor (not shown). When the reset button 25 is pressed, the system LSI 11 reboots a boot program of the game device 3. The eject button 26 is connected to the disc drive 14. When the eject button 26 is pressed, the optical disc 4 is ejected from the disc drive 14.

In other example embodiments, some of the components of the game device 3 may be provided as extension devices separate from the game device 3. In this case, an extension device may be connected to the game device 3 via, for example, the extension connector 20. Specifically, an extension device may include, for example, the codec LSI 27, the terminal communication module 28, and the antenna 29, and can be attached to or detached from the extension connector 20. Thus, by connecting the extension device to a game device which does not include the above components, the game device can communicate with the terminal device 7.

### [5. Configuration of controller 5]

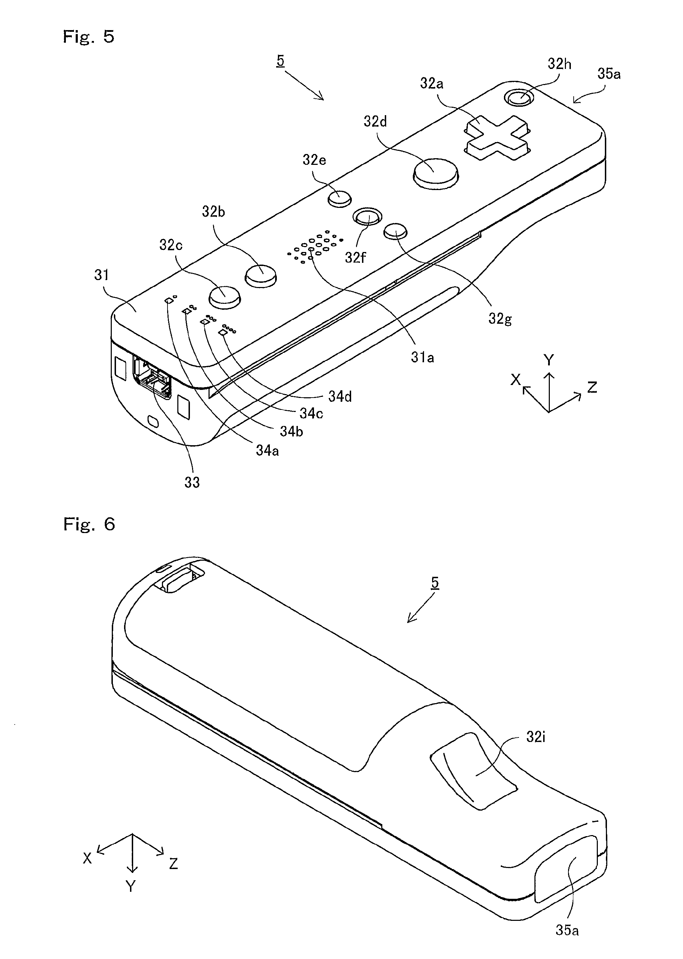

Now, with reference to FIGS. 5 through 7, the controller 5 will be described. FIG. 5 is a perspective view illustrating an external configuration of the example controller 5. FIG. 6 is a perspective view illustrating an external configuration of the controller 5. The perspective view of FIG. 5 shows the controller 5 as viewed from the top rear side thereof, and the perspective view of FIG. 6 shows the controller 5 as viewed from the bottom front side thereof. The controller 5 may be any controller device capable of being controlled by the player. In the example embodiment, the controller 5 includes buttons and sensors, and the player can perform button operations and an operation of moving the controller device itself. While the controller 5 does not include a display unit in the example embodiment, the controller 5 may include a display unit in other embodiments.

As shown in FIG. 5 and FIG. 6, the controller 5 includes a housing 31 formed by, for example, plastic molding. The housing 31 has a generally parallelepiped shape extending in a longitudinal direction from front to rear (Z-axis direction shown in FIG. 5), and as a whole is sized to be held by one hand of an adult or even a child. The user can perform an operation by pressing a button provided in the controller 5, and moving the controller 5 itself to change the position and the attitude (tilt) thereof.

The housing 31 has a plurality of operation buttons. As shown in FIG. 5, on a top surface of the housing 31, a cross button 32a, a first button 32b, a second button 32c, an A button 32d, a minus button 32e, a home button 32f, a plus button 32g, and a power button 32h are provided. In the example embodiment, the top surface of the housing 31 on which the buttons 32a through 32h are provided may be referred to as a "button surface". Meanwhile, as shown in FIG. 6, a recessed portion is formed in a bottom surface of the housing 31, and a B button 32i is provided on a rear slope surface of the recessed portion. The operation buttons 32a through 32i are appropriately assigned respective functions in accordance with the information processing program to be executed by the game device 3. The power button 32h is intended to remotely turn ON/OFF the game device 3.

On a rear surface of the housing 31, the connector 33 is provided. The connector 33 is used for connecting the controller 5 to another device (e.g., another sensor unit or controller). Both sides of the connector 33 on the rear surface of the housing 31 have an engagement hole 33a for preventing easy inadvertent disengagement of the above-described another device.

In a rear-side portion of the top surface of the housing 31, a plurality of (four in FIG. 5) LEDs 34a through 34d are provided. The controller 5 is assigned a controller type (number) so as to be distinguishable from another controller. The LEDs 34a through 34d are each used, for example, for informing the user of the controller type which is currently set for the controller 5, or for informing the user of remaining battery power of the controller 5. Specifically, when an operation is to be performed using the controller 5, one of the LEDs 34a through 34d corresponding to the controller type is lit up.

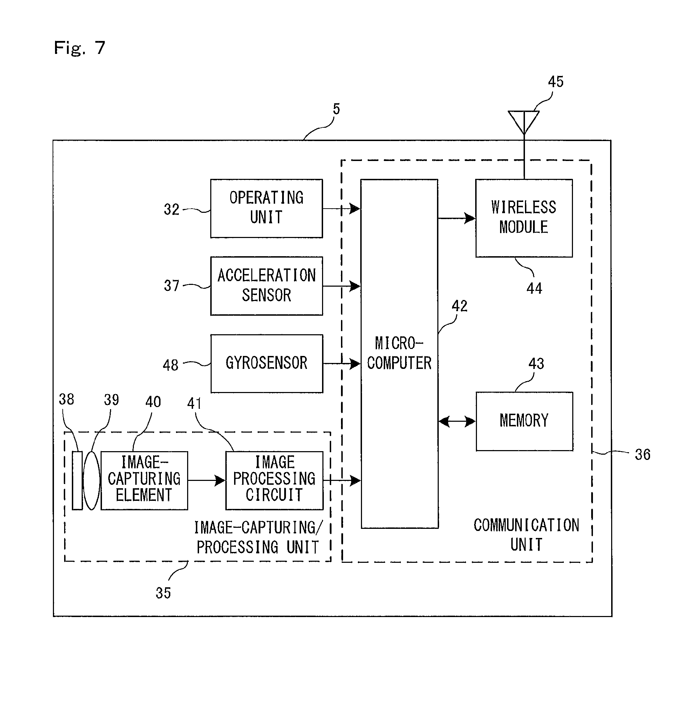

The controller 5 has an image-capturing/processing unit 35 (FIG. 7), and a light incident surface 35a through which light is incident on the image-capturing/processing unit 35 is provided on a front surface of the housing 31 as shown in FIG. 6. The light incident surface 35a is formed of a material transmissive of at least infrared light output by the markers 6R and 6L.

On the top surface of the housing 31, sound holes 31a for externally outputting a sound from a speaker (not shown) incorporated in the controller 5 is provided between the first button 32b and the home button 32f.

A substrate is fixed inside the housing 31, and the operation buttons 32a through 32h, the LEDs 34a through 34d, an acceleration sensor 37, an antenna 45, a speaker, a wireless module 44, and the like are provided on the substrate. These components are connected to a microcomputer 42 (FIG. 7) via lines (not shown) formed on the substrate or the like.

At a front edge of the substrate, the image-capturing/processing unit 35 is provided. The image-capturing/processing unit 35 includes an infrared filter 38, a lens 39, an image-capturing element 40 and an image processing circuit 41 (FIG. 7) located in this order from the front side of the controller 5. These components 38 through 41 are attached on a bottom main surface of the substrate.

Moreover on the substrate, the microcomputer 42 and a vibrator are provided. The vibrator is, for example, a vibration motor or a solenoid, and is connected to the microcomputer 42 via lines formed on the substrate or the like. The controller 5 is vibrated by actuation of the vibrator based on a command from the microcomputer 42. Thus, the vibration is conveyed to the user's hand holding the controller 5, and thus a so-called vibration-feedback game is realized.

In addition to the above components, the controller 5 includes a crystal oscillator for generating a basic clock for the microcomputer 42, an amplifier for outputting a sound signal to the speaker, etc.

The shape of the controller 5, the shape of each operation button, the number and the positions of acceleration sensor and vibrator and so on shown in FIGS. 5 and 6 are merely examples, and other shapes, numbers, and positions may be employed. Although in the example embodiment, the imaging direction of image-capturing means is a Z-axis positive direction, the imaging direction may be any direction. That is, the image-capturing/processing unit 35 (light incident surface 35a through which light is incident on the image-capturing/processing unit 35) of the controller 5 may not necessarily be provided on the front surface of the housing 31, but may be provided on any other surface on which light can be received from the outside of the housing 31.

FIG. 7 is a block diagram illustrating a configuration of the example controller 5. The controller 5 includes the operating units 32 (operation buttons 32a through 32i), the image-capturing/processing unit 35, a communication unit 36, the acceleration sensor 37, and a gyrosensor 48. The controller 5 transmits, to the game device 3, data representing the content of an operation performed on the controller 5 itself as operation data. Hereinafter, operation data transmitted by the controller 5 may be referred to as "controller operation data", and operation data transmitted by the terminal device 7 may be referred to as "terminal operation data".

The operating unit 32 includes the operation buttons 32a through 32i described above, and outputs, to the microcomputer 42 of the communication unit 36, operation button data representing an input state of each of the operation buttons 32a through 32i (that is, whether or not each operation button 32a through 32i has been pressed).

The image-capturing/processing unit 35 is a system for analyzing image data taken by the image-capturing means and calculating, for example, the centroid, the size or the like of an area having a high brightness in the image data. The image-capturing/processing unit 35 includes the infrared filter 38, the lens 39, the image-capturing element 40 and the image processing circuit 41. The infrared filter 38 transmits therethrough only infrared light included in the light incident on a front surface of the controller 5. The lens 39 collects the infrared light transmitted through the infrared filter 38 so as to be incident on the image-capturing element 40. The image-capturing element 40 is a solid-state imaging device such as, for example, a CMOS sensor or a CCD sensor, which receives the infrared light collected by the lens 39 and outputs an image signal. The marker unit 55 of the terminal device 7 and the marker device 6, which are image-capturing targets, each include a marker(s) for outputting infrared light. Therefore, the infrared filter 38 enables the image-capturing element 40 to receive only the infrared light transmitted through the infrared filter 38 and generate image data, so that an image of each image-capturing target (marker unit 55 and/or marker device 6) can be captured with enhanced accuracy. Hereinafter, an image captured by the image-capturing element 40 will be referred to as a "captured image". The image data generated by the image-capturing element 40 is processed by the image processing circuit 41. The image processing circuit 41 calculates a position, in the captured image, of an image-capturing target. The image processing circuit 41 outputs a coordinate point of the calculated position to the microcomputer 42 of the communication unit 36. Data representing the coordinate point is transmitted as operation data to the game device 3 by the microcomputer 42. Hereinafter, such a coordinate point will be referred to as a "marker coordinate point". The marker coordinate point changes depending on the attitude (angle of tilt) or the position of the controller 5 itself, and therefore the game device 3 can calculate the attitude and the position of the controller 5 using the marker coordinate point.

In other embodiments, the controller 5 may not include the image processing circuit 41, and the controller 5 may transmit the captured image as it is to the game device 3. In this case, the game device 3 may include a circuit or a program having the same function as that of the image processing circuit 41 and calculate the marker coordinate point.

The acceleration sensor 37 detects an acceleration (including a gravitational acceleration) of the controller 5, that is, a force (including gravity) applied to the controller 5. The acceleration sensor 37 detects a value of an acceleration (linear acceleration) applied to a detection unit of the acceleration sensor 37 in a straight line direction along a sensing axis direction, among all accelerations applied to a detection unit of the acceleration sensor 37. While the acceleration sensor 37 may be any acceleration sensor capable of detecting an acceleration in one or more sensing axis directions, the acceleration sensor 37 in the example embodiment detects a linear acceleration in three axis directions with respect to the controller 5, i.e., an up-down direction (Y-axis direction shown in FIG. 5), a left-right direction (X-axis direction shown in FIG. 5), and a front-rear direction (Z-axis direction shown in FIG. 5). The acceleration sensor 37 is, for example, a capacitive MEMS (Micro-Electro Mechanical System) acceleration sensor. However, another type of acceleration sensor may be used. Data representing the acceleration (acceleration data) detected by the acceleration sensor 37 is output to the communication unit 36. The acceleration detected by the acceleration sensor 37 changes depending on the attitude (angle of tilt) or the movement of the controller 5, and therefore the game device 3 can calculate the attitude and the movement of the controller 5 using the obtained acceleration data. In the example embodiment, the game device 3 calculates the attitude, angle of tilt, etc., of the controller 5 based on the obtained acceleration data.

The gyrosensor 48 detects angular velocities about three axes (in the example embodiment, the X-, Y-, and Z-axes). In this specification, the directions of rotation about the X-axis, the Y-axis, and the Z-axis relative to the imaging direction (Z-axis positive direction) of the controller 5 are referred to as a pitch direction, a yaw direction, and a roll direction, respectively. So long as the gyrosensor 48 can detect the angular velocities about the three axes, any number of gyrosensors or any combination of gyrosensors may be included therein. Data representing the angular velocities detected by the gyrosensor 48 is output to the communication unit 36. Alternatively, the gyrosensor 48 may detect an angular velocity about one axis or angular velocities about two axes.

The communication unit 36 includes the microcomputer 42, a memory 43, the wireless module 44 and the antenna 45. By the communication unit 36 (wireless module 44 and antenna 45), the controller 5 function as a wireless controller. The microcomputer 42 controls the wireless module 44 for wirelessly transmitting data obtained by the microcomputer 42 to the game device 3, while using the memory 43 as a storage area for performing a process.

Data output by each of the operating units 32, the image-capturing/processing unit 35, the acceleration sensor 37, and the gyrosensor 48 to the microcomputer 42 is temporarily stored on the memory 43. These types of data are transmitted to the game device 3 as operation data (controller operation data). Specifically, at the time of transmission to the controller communication module 19 of the game device 3, the microcomputer 42 outputs the operation data stored on the memory 43 to the wireless module 44. The wireless module 44 uses, for example, the Bluetooth (registered trademark) technology to transmit the operation data to the game device 3. The CPU 10 of the game device 3 performs the game process using the operation data obtained from the controller 5. The wireless transmission from the communication unit 36 to the controller communication module 19 is sequentially performed at a predetermined time interval. Since the game process is generally performed at a cycle of 1/60 sec. (corresponding to one frame time), data may be transmitted at a cycle of a shorter time period.

As described above, the controller 5 can transmit each of marker coordinate data, acceleration data, angular velocity data, and operation button data as operation data representing an operation performed thereon. In addition, the game device 3 executes the game process using the operation data as a game input. Accordingly, by using the controller 5, the user can perform the game operation of moving the controller 5 itself, in addition to a conventional general game operation of pressing an operation button. For example, the user can perform operations of tilting the controller 5 to an arbitrary attitude, pointing the controller 5 to an arbitrary position on the screen, and moving the controller 5 itself.

### [6. Configuration of terminal device 7]

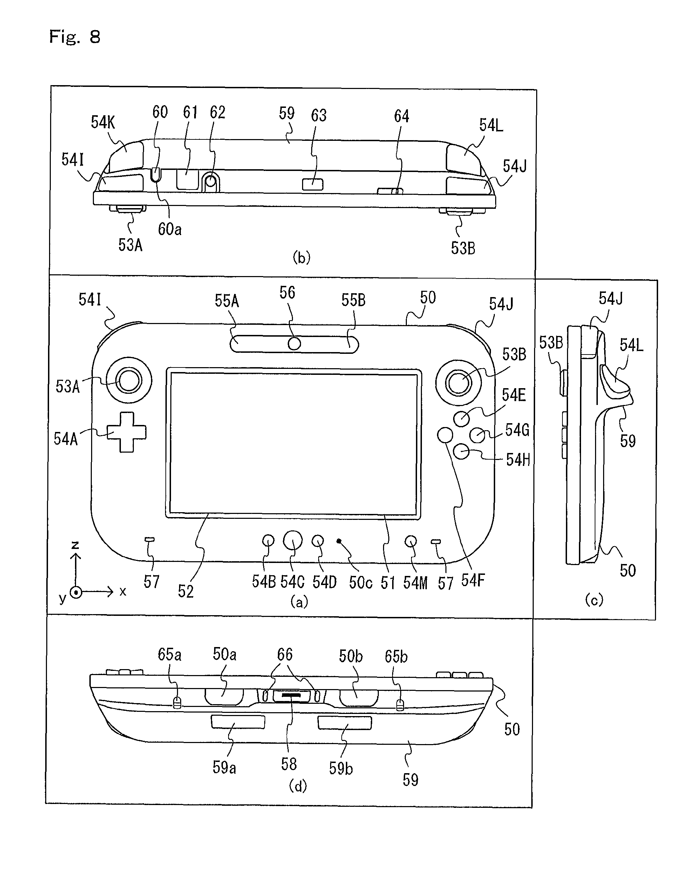

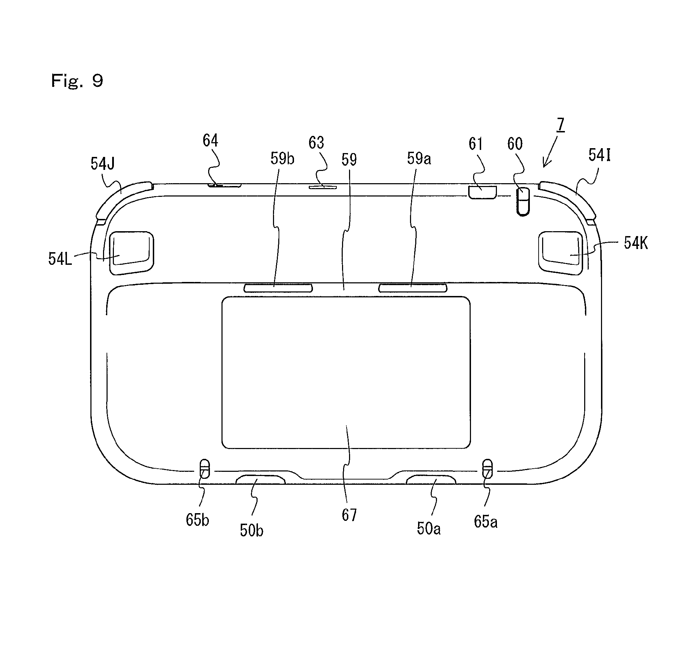

Now, a configuration of the terminal device 7 will be described with reference to FIGS. 8 through 10. FIG. 8 is a plan view showing an external configuration of the example terminal device 7. FIG. 8(a) is a front view of the terminal device 7, FIG. 8(b) is a top view thereof, FIG. 8(c) is a right side view thereof, and FIG. 8(d) is a bottom view thereof. FIG. 9 is a rear view of the example terminal device 7. The terminal device 7 may be of any configuration as long as including a display unit.

As shown in FIG. 8, the terminal device 7 includes a housing 50 generally having a horizontally-elongated rectangular plate shape. It can also be considered that the terminal device 7 is a tablet-type information processing device. The housing 50 may have a curved surface or may have a protrusion, etc., as long as it is generally in a plate shape. The housing 50 is sized so as to be held by the user. Thus, the user can hold and move the terminal device 7, or can change the position in which the terminal device 7 is placed. Although the details will be described later, the terminal device 7 is configured so as to be held and operated easily by the user even though the terminal device 7 is such a relatively large terminal device (controller device) as described above.

The terminal device 7 includes the LCD 51 on a front surface (front side) of the housing 50. The LCD 51 is provided near the center of the front surface of the housing 50. Therefore, the user can hold and move the terminal device 7 while looking at a screen of the LCD 51 by holding opposing end portions of the housing 50 with respect to the LCD 51. The user can hold the terminal device 7 in a landscape position (in a horizontally-oriented direction) by holding left and right opposing end portions of the housing 50 with respect to the LCD 51, or the user can hold the terminal device 7 in a portrait position (in a vertically-oriented direction).

As shown in FIG. 8(a), the terminal device 7 includes the touch panel 52 on the screen of the LCD 51 as an operating unit. The touch panel 52 may be of any type, for example, a resistive type, a capacitive type, etc. The touch panel 52 may be of a single-touch type or a multi-touch type. An input on the touch panel 52 can be made with a touch pen 60, a finger of the user, etc. The housing 50 has an accommodation hole 60a for accommodating the touch pen 60 usable for performing an operation on the touch panel 52 (see FIG. 8(b)). The accommodation hole 60a is provided in a top surface of the housing 50 so that the touch pen 60 does not fall here. Alternatively, the accommodation hole 60a may be provided on a side surface or a bottom surface of the housing 50.

As shown in FIG. 8, the terminal device 7 includes two analog sticks (slide pads) 53A and 53B and a plurality of buttons (keys) 54A through 54M, as operating units. The analog sticks 53A and 53B are each a direction-specifying device. The analog sticks 53A and 53B are each configured so that a movable member (stick portion) can be slid in any direction (at any angle in the up, down, left, right and diagonal directions) with respect to the front surface of the housing 50. The movable member of each of the analog sticks 53A and 53B may be of such a type as to be tilted in any direction with respect to the front surface of the housing 50. The left analog stick 53A is provided on the left side of the screen of the LCD 51, and the right analog stick 53B is provided on the right side of the screen of the LCD 51.

The buttons 54A through 54L are operating units for making predetermined inputs, and are keys that can be pressed. As will be discussed below, the buttons 54A through 54L are provided at such positions that the user can operate them while holding left and right portions of the terminal device 7. Therefore, the user can operate these operating units easily even when holding and moving the terminal device 7.

As shown in FIG. 8(a), the cross button (direction-input button) 54A and the buttons 54B through 54H and 54M, among the operation buttons 54A through 54M, are provided on a front surface of the housing 50. These buttons 54A through 54H and 54M are provided at positions at which these buttons can be operated by the thumbs of the user. The cross button 54A is provided on the left side of the LCD 51 and below the left analog stick 53A. The cross button 54A has a cross shape, and is a button with which it is possible to specify at least up, down, left and right directions.

The buttons 54B through 54D are provided below the LCD 51. These three buttons 54B through 54D are provided at positions at which these buttons can be operated with either the left or the right hand of the user. The terminal device 7 includes the power button 54M for turning ON/OFF the power of the terminal device 7. The power of the game device 3 can be remotely turned ON/OFF by operating the power button 54M. The power button 54M is provided below the LCD 51 as are the buttons 54B through 54D. The power button 54M is provided on the right side of the buttons 54B through 54D. The four buttons 54E through 54H are provided on the right side of the LCD 51 and below the right analog stick 53B. The four buttons 54E through 54H are also provided at upper, lower, left and right positions (with respect to the center position among the four buttons 54E through 54H). Therefore, with the terminal device 7, the four buttons 54E through 54H can also serve as buttons with which the user specifies the up, down, left and right directions.

In the example embodiment, a projecting portion (eaves portion 59) is provided on the rear side of the housing 50 (side opposite to the front surface where the LCD 51 is provided) (see FIGS. 8(c) and 9). As shown in FIG. 8(c), the eaves portion 59 is a mountain-shaped member which is projecting from a rear surface of the generally plate-shaped housing 50. The projecting portion has such a height (thickness) that it can rest on fingers of the user holding the rear surface of the housing 50. The user can hold the terminal device 7 stably without getting tired even if the terminal device 7 has a relatively large size, by holding the terminal device 7 while resting his/her fingers on the eaves portion 59 (placing the eaves portion 59 on the fingers). That is, the eaves portion 59 can be referred to as a supporting member for allowing the fingers to support the housing 50, or can be referred to also as a "finger-resting portion".

The eaves portion 59 is provided above the center of the housing 50 with respect to an up-down direction. The eaves portion 59 is provided on the reverse side so as to generally correspond to the operating units (analog sticks 53A and 53B) which are provided on the front surface of the housing 50. That is, the projecting portion is provided so as to extend across an area, on the reverse side, including positions corresponding to the operating units which are provided respectively on the left side and on the right side of the display unit. Therefore, for operating the operating units, the user can hold the terminal device 7 so as to support the eaves portion 59 with his/her middle fingers or ring fingers. Thus, it is easier to hold the terminal device 7, and it is easier to operate the operating units. In the example embodiment, since the projecting portion has an eaves-like shape extending in a left-right direction, the user can hold the terminal device 7 with his/her middle fingers or ring fingers placed along a bottom surface of the projecting portion. This makes it easier to hold the terminal device 7. In other embodiments, the eaves portion 59 may be located at any position and may have any size and any shape. The eaves portion 59 may not be formed.

As shown in FIGS. 8(a), 8(b) and 8(c), a first L button 54I and a first R button 54J are provided respectively in left and right opposing portions on the top surface of the housing 50. In other embodiments, the operating units provided respectively in the left and right portions on the top surface of the housing 50 do not have to be provided at left and right ends, and may be provided at positions other than the ends. The operating units may be provided respectively on left and right side surfaces of the housing 50. As shown in FIGS. 8(c) and 9, a second L button 54K and a second R button 54L are provided on a top surface of the projecting portion (eaves portion 59). The second L button 54K is provided near a left end of the eaves portion 59. The second R button 54L is provided near a right end of the eaves portion 59.

In the example embodiment, the user can hold the terminal device 7 easily by holding the terminal device 7 with his/her fingers abutting against the bottom surface of the projecting portion (eaves portion 59). Since the first L button 54I and the first R button 54J are provided on the top surface of the housing 50 and the second L button 54K and the second R button 54L are provided on the top surface of the projecting portion, the user can operate these buttons easily in the state described above. The user can hold the terminal device 7 with his/her ring fingers abutting against the bottom surface of the eaves portion 59 (so as to support the eaves portion 59 with his/her ring fingers), or can also hold the terminal device 7 with his/her middle fingers abutting against the bottom surface of the eaves portion 59.

With the terminal device 7 in the example embodiment, the projecting portion (eaves portion 59) is provided on the rear surface. Therefore, when the terminal device 7 is put down with the screen of the LCD 51 (front surface of the housing 50) facing up, the screen is slightly inclined. Therefore, the screen is seen more easily with the terminal device 7 put down. Input operations to the touch panel 52 are performed more easily with the terminal device 7 put down. In other embodiments, an additional projecting portion having generally the same height as the eaves portion 59 may be formed on the rear surface of the housing 50. In this case, with the screen of the LCD 51 facing up, the terminal device 7 can be put down so that the screen is horizontal with the projecting portions in contact with a floor surface. The additional projecting portion may be a removable (or foldable) member. In this case, the terminal device can be put down with the screen either slightly inclined or with the screen horizontal. That is, in the case where the terminal device 7 is put down and used, the eaves portion 59 can be used as a leg portion.

The buttons 54A through 54L are each assigned an appropriate function in accordance with the game program. For example, the cross button 54A and the buttons 54E through 54H may be used for direction-specifying operations, selection operations, etc., whereas the buttons 54B through 54E may be used for OK button operations, cancel button operations, etc. The terminal device 7 may include a button for turning ON/OFF the power of the LCD 51, or a button for performing a connection setting (pairing) with the game device 3.

As shown in FIG. 8(a), the terminal device 7 includes the marker unit 55 including the marker 55A and the marker 55B on the front surface of the housing 50. The marker unit 55 is provided above the LCD 51. The marker 55A and the marker 55B are each formed by one or more infrared LEDs, as are the markers 6R and 6L of the marker device 6. The infrared LEDs of the markers 55A and 55B are provided inside a window portion that is transmissive of infrared light. The marker unit 55 is used for the game device 3 to calculate the movement, etc., of the controller 5, as is the marker device 6 described above. The game device 3 can control lighting of the infrared LEDs of the marker unit 55.

The terminal device 7 includes the camera 56 as the image-capturing means. The camera 56 includes an image-capturing element (e.g., CCD image sensor, CMOS image sensor, or the like) having a predetermined resolution, and a lens. As shown in FIG. 8, the camera 56 is provided on the front surface of the housing 50 in the example embodiment. Therefore, the camera 56 can capture an image of the face of the user holding the terminal device 7, and can capture an image of the user playing a game while looking at the LCD 51, for example. In the example embodiment, the camera 56 is provided between the two markers 55A and 55B.

The terminal device 7 includes a microphone 79 as sound input means. A microphone hole 50c is provided in the front surface of the housing 50. The microphone 79 is provided inside the housing 50 behind the microphone hole 50c. The microphone 79 detects a sound around the terminal device 7 such as the voice of the user or the like.

The terminal device 7 includes speakers 77 as the sound output means. As shown in FIG. 8(d), speaker holes 57 are provided in a lower portion of the front surface of the housing 50. An output sound from the speakers 77 is output from the speaker holes 57. In the example embodiment, the terminal device 7 includes two speakers, and the speaker holes 57 are provided at the respective positions of the left speaker and the right speaker. The terminal device 7 includes a knob 64 for adjusting the sound volume of the speakers 77. The terminal device 7 includes a sound output terminal 62 connectable to a sound output unit such as an earphone. Although the sound output terminal 62 and the knob 64 are provided on the top surface of the housing 50 considering the fact that an additional device is connected to the bottom surface of the housing 50, the sound output terminal 62 and the knob 64 may alternatively be provided on the left or right side surface or on the bottom surface.

The housing 50 includes a window 63 through which an infrared signal from an infrared communication module 82 is output to the outside of the terminal device 7. The window 63 is provided on the top surface of the housing 50 so that the infrared signal is output in a forward direction of the user when the user holds the opposing sides of the LCD 51. In other embodiments, the window 63 may be provided at any position such as, for example, on the rear surface of the housing 50.

The terminal device 7 includes an extension connector 58 via which another device can be connected to the terminal device 7. The extension connector 58 is a communication terminal for exchanging data (information) with another device connected to the terminal device 7. The additional device connected to the extension connector 58 may be any device, and may be, for example, a game-specific controller (gun-shaped controller, etc.) or an input device such as a keyboard or the like. The extension connector 58 may be omitted if there is no need to connect an additional device to terminal device 7. The extension connector 58 may include a terminal for supplying power to the additional device or a terminal for charging.

In addition to the extension connector 58, the terminal device 7 includes a charging terminal 66 for obtaining power from an additional device. When the charging terminal 66 is connected to a charging stand (not shown), power is supplied from the charging stand to the terminal device 7.

The terminal device 7 includes a charging connector, and the housing 50 includes a cover portion 61 for protecting the charging connector. The charging connector can be connected to a charger 86 to be described below, and power is supplied from the charger 86 to the terminal device 7 when the charging connector is connected to the charger.

As shown in FIGS. 8(d) and 9, engagement holes 59a and 59b engageable with tab portions of an additional device are provided in the bottom surface of the projecting portion (the eaves portion 59). Engagement holes 50a and 50b are provided in the bottom surface of the housing 50. In the case where the additional device is connected to the terminal device 7, four tab portions of the additional device are respectively engaged with the four engagement holes, which secures the terminal device 7 and the additional device with each other.

The terminal device 7 includes a battery cover 67 which can be attached to and removed from the housing 50. A battery (battery 85 shown in FIG. 10) is placed inside the battery cover 67. In the example embodiment, the battery cover 67 is provided on the rear side of the housing 50, below the projecting portion (the eaves portion 59).

The housing 50 of the terminal device 7 includes holes 65a and 65b through which a strap cord can be tied to the terminal device 7. The user can tie a strap to one of the holes 65a and 65b, and fasten the strap to the wrist of the user. Thus, even if the user drops the terminal device 7 or if the terminal device 7 comes off the hand, the terminal device 7 is prevented from falling or hitting another object.

With the terminal device 7 shown in FIGS. 8 and 9, the shape of each operation button, the shape of the housing 50, the number and the positions of the components, etc., are merely examples, and the example embodiment can be realized with other shapes, numbers, and positions.

Now, an internal configuration of the terminal device 7 will be described with reference to FIG. 10. FIG. 10 is a block diagram showing an internal configuration of the example terminal device 7. As shown in FIG. 10, in addition to the components shown in FIG. 8, the terminal device 7 includes a touch panel controller 71, a magnetic sensor 72, an acceleration sensor 73, the gyrosensor 74, a user interface controller (UI controller) 75, a codec LSI 76, the speakers 77, a sound IC 78, the microphone 79, a wireless module 80, an antenna 81, the infrared communication module 82, a flash memory 83, a power supply IC 84, the battery 85, and a vibrator 89. These electronic components are mounted on an electronic circuit board and accommodated in the housing 50.

The UI controller 75 is a circuit for controlling input/output of data to/from various types of input/output units. The UI controller 75 is connected to the touch panel controller 71, the analog sticks 53 (analog sticks 53A and 53B), the operation buttons 54 (operation buttons 54A through 54L), the marker unit 55, the magnetic sensor 72, the acceleration sensor 73, the gyrosensor 74, and the vibrator 89. The UI controller 75 is connected to the codec LSI 76 and the extension connector 58. The power supply IC 84 is connected to the UI controller 75, and power is supplied to various units via the UI controller 75. The built-in battery 85 is connected to the power supply IC 84 to supply power. The charger 86 or a cable with which power can be obtained from an external power source can be connected to the power supply IC 84 via a charging connector, and the terminal device 7 can be supplied with power from an external power source, and also can be charged, using the charger 86 or the cable. The terminal device 7 may be charged by attaching the terminal device 7 to a cradle (not shown) having a charging functions.

The touch panel controller 71 is a circuit connected to the touch panel 52 for controlling the touch panel 52. The touch panel controller 71 generates input position data of a predetermined format based on a signal from the touch panel 52, and outputs the data to the UI controller 75. The input position data represents, for example, coordinates of a position on the input surface of the touch panel 52 at which an input has been made. The touch panel controller 71 reads a signal from the touch panel 52 and generates input position data at a rate of once per predetermined amount of time. Various control instructions for the touch panel 52 are output from the UI controller 75 to the touch panel controller 71.

The analog sticks 53 each output, to the UI controller 75, stick data representing the direction and the amount of slide (or tilt) of the stick portion operated with a finger of the user. The operation buttons 54 each output, to the UI controller 75, operation button data representing an input state of each of the operation buttons 54A through 54L (e.g., whether the button has been pressed or not).

The magnetic sensor 72 detects an azimuthal direction by sensing the size and direction of the magnetic field. Azimuthal direction data representing the detected azimuthal direction is output to the UI controller 75. A control instruction for the magnetic sensor 72 is output from the UI controller 75 to the magnetic sensor 72. While there are sensors using an MI (magnetic impedance) element, a fluxgate sensor, a Hall element, a GMR (giant magnetoresistive) element, a TMR (tunnel magneto-resistance) element, an AMR (anisotropic magnetoresistive) element, etc., the magnetic sensor 72 may be any sensor as long as it is possible to detect the azimuthal direction. Strictly describing, in a place where there is a magnetic field other than a geomagnetic field, the obtained azimuthal direction data does not represent the azimuthal direction. Nevertheless, when the terminal device 7 moves, the azimuthal direction data changes even in such a case. Therefore, it possible to calculate the change in the attitude of the terminal device 7.

The acceleration sensor 73 is provided inside the housing 50 for detecting the magnitude of a linear acceleration along each of directions of three axes (x, y and z axes shown in FIG. 8(a)). Specifically, the acceleration sensor 73 detects the magnitude of the linear acceleration along each of the axes, where the x axis lies in a longitudinal direction of the housing 50, the y axis lies in a direction vertical to the front surface of the housing 50, and the z axis lies in a width direction of the housing 50. Acceleration data representing each detected acceleration is output to the UI controller 75. A control instruction for the acceleration sensor 73 is output from the UI controller 75 to the acceleration sensor 73. While the acceleration sensor 73 is assumed to be, for example, a capacitive-type MEMS-type acceleration sensor in the example embodiment, other types of acceleration sensors may be employed in other embodiments. The acceleration sensor 73 may be an acceleration sensor for detecting an acceleration along one axis or two axes.

The gyrosensor 74 is provided inside the housing 50 for detecting angular velocities about the three axes, i.e., the x-axis, the y-axis and the z-axis. Angular velocity data representing each detected angular velocity is output to the UI controller 75. A control instruction for the gyrosensor 74 is output from the UI controller 75 to the gyrosensor 74. The number and combination of gyrosensors used for detecting angular velocities about the three axes may be any number and combination, and the gyrosensor 74 may be formed by a 2-axis gyrosensor and a 1-axis gyrosensor, as is the gyrosensor 48. The gyrosensor 74 may be a gyrosensor for detecting an angular velocity about one axis or angular velocities about two axes.

The vibrator 89 is, for example, a vibration motor or a solenoid, and is connected to the UI controller 75. The terminal device 7 is vibrated by actuation of the vibrator 89 in response to a command from the UI controller 75. Thus, a so-called vibration-feedback game is realized, in which the vibration is conveyed to the user's hand holding the terminal device 7.

The UI controller 75 outputs, to the codec LSI 76, operation data including input position data, stick data, operation button data, azimuthal direction data, acceleration data, and angular velocity data received from various components described above. In the case where another device is connected to the terminal device 7 via the extension connector 58, data representing an operation performed on the another device may be further included in the operation data.

The codec LSI 76 is a circuit for performing a compression process on data to be transmitted to the game device 3, and a decompression process on data transmitted from the game device 3. The LCD 51, the camera 56, the sound IC 78, the wireless module 80, the flash memory 83, and the infrared communication module 82 are connected to the codec LSI 76. The codec LSI 76 includes a CPU 87 and an internal memory 88. While the terminal device 7 does not perform a game process itself, the terminal device 7 may execute a minimal possible program for the management thereof and for the communication. A program stored on the flash memory 83 is read out to the internal memory 88 and executed by the CPU 87 upon power-up, and thus the terminal device 7 is started. A part of an area of the internal memory 88 is used as the VRAM for the LCD 51.

The camera 56 captures an image in response to an instruction from the game device 3, and outputs the captured image data to the codec LSI 76. A control instructions for the camera 56, such as an image-capturing instruction or the like, is output from the codec LSI 76 to the camera 56. The camera 56 can also capture a moving image. That is, the camera 56 can repeatedly capture images and repeatedly output the image data to the codec LSI 76.

The sound IC 78 is a circuit connected to the speakers 77 and the microphone 79 for controlling input/output of sound data to/from the speakers 77 and the microphone 79. That is, when receiving sound data from the codec LSI 76, the sound IC 78 outputs a sound signal obtained by performing D/A conversion on the sound data to the speakers 77 so that sound is output from the speakers 77. The microphone 79 detects a sound propagated to the terminal device 7 (voice of the user, etc.), and outputs a sound signal representing such a sound to the sound IC 78. The sound IC 78 performs A/D conversion on the sound signal from the microphone 79 to output sound data of a predetermined format to the codec LSI 76.

The infrared communication module 82 emits an infrared signal to perform infrared communication with another device. Here, the infrared communication module 82 has, for example, a function of performing infrared communication in accordance with the IrDA standard and a function of outputting an infrared signal (control signal) for controlling the TV 2.

The codec LSI 76 transmits, as terminal operation data, image data from the camera 56, sound data from the microphone 79, and operation data from the UI controller 75 to the game device 3 via the wireless module 80. In the example embodiment, the codec LSI 76 performs a compression process similar to that of the codec LSI 27 on the image data and the sound data. The terminal operation data and the compressed image data and sound data are output, as transmission data, to the wireless module 80. The antenna 81 is connected to the wireless module 80, and the wireless module 80 transmits the transmission data to the game device 3 via the antenna 81. The wireless module 80 has a similar function to that of the terminal communication module 28 of the game device 3. That is, the wireless module 80 has a function of connecting to a wireless LAN by a scheme in conformity with the IEEE 802.11n standard, for example. The transmitted data may be encrypted when necessary or may not be encrypted.

As described above, the transmission data transmitted from the terminal device 7 to the game device 3 includes operation data (terminal operation data), image data, and sound data. In the case where another device is connected to the terminal device 7 via the extension connector 58, data received from the another device may be further included in the transmission data. The codec LSI 76 may transmit, to the game device 3, data received via infrared communication by the infrared communication module 82 as being included in the transmission data when necessary.

As described above, compressed image data and sound data are transmitted from the game device 3 to the terminal device 7. These types of data are received by the antenna 81 (reception unit) and transferred to the codec LSI 76 via the wireless module 80. The codec LSI 76 decompresses the received image data and sound data. The decompressed image data is output to the LCD 51, and the image is displayed on the LCD 51. That is, the codec LSI 76 (the CPU 87) causes the received image data to be displayed on the display unit. The decompressed sound data is output to the sound IC 78, and the sound IC 78 causes sound to be output from the speakers 77.

In the case where terminal control data is included in data received from the game device 3, the codec LSI 76 and the UI controller 75 each issue a control instruction to various units in accordance with the terminal control data. As described above, the terminal control data is data representing a control instruction for each of the components of the terminal device 7 (in the example embodiment, the camera 56, the touch panel controller 71, the marker unit 55, the sensors 72 through 74, and the infrared communication module 82). In the example embodiment, the control instruction represented by the terminal control data may be an instruction to activate the operation of each of the components or deactivate (stop) the operation thereof. That is, components that are not used in a game may be deactivated in order to reduce the power consumption, in which case it is ensured that data from the deactivated components are not included in the transmission data to be transmitted from the terminal device 7 to the game device 3. For the marker unit 55, which includes infrared LEDs, the control can be done simply by turning ON/OFF the power supply thereto.

The game device 3 can control an output of the infrared communication module 82, and thus controls the operation of the TV 2. Specifically, the game device 3 outputs, to the terminal device 7, an instruction (terminal control data described above) to cause the infrared communication module 82 to output an infrared signal corresponding to a control command for controlling the TV 2. In response to this instruction, the codec LSI 76 causes the infrared communication module 82 to output an infrared signal corresponding to the control command. Here, the TV 2 includes an infrared reception unit capable of receiving an infrared signal. By the infrared reception unit receiving the infrared signal output by the infrared communication module 82, the TV 2 operates in accordance with the infrared signal. The instruction from the game device 3 may indicate an infrared signal itself, or when the terminal device 7 has an infrared signal pattern stored thereon, may indicate the pattern.

As described above, while the terminal device 7 includes the operating units such as the touch panel 52, the analog sticks 53 and the operation buttons 54. In other embodiments, other operating units may be included instead of, or in addition to, these operating units.

The terminal device 7 includes the magnetic sensor 72, the acceleration sensor 73 and the gyrosensor 74 as the sensors for calculating the movement of the terminal device 7 (including the position and the attitude thereof, or changes in the position and the attitude thereof). In other embodiments, the terminal device 7 may include only one or two of these sensors, or may not include any of these sensors. In still other embodiments, other sensors may be included instead of, or in addition to, these sensors.

While the terminal device 7 includes the camera 56 and the microphone 79, the terminal device 7 may not include the camera 56 or the microphone 79, or may include only one of them in other embodiments.

While the terminal device 7 includes the marker unit 55 as a component for calculating the positional relationship between the terminal device 7 and the controller 5 (the position and/or attitude, etc., of the terminal device 7 as seen from the controller 5), the terminal device 7 may not include the marker unit 55 in other embodiments. In still other embodiments, the terminal device 7 may include other means as a component for calculating the positional relationship. For example, in other embodiments, the controller 5 may include a marker unit, and the terminal device 7 may include an image-capturing element. In such a case, the marker device 6 may include an image-capturing element, instead of an infrared LED.

### [7. Operation of video display system]

Now, an operation of the video display system 90 will be described. Hereinafter, a case will be described in which the game system 1 requests the transmission server 91 to acquire the video information (selection instruction), the transmission server 91 transmits the video information in response to the request, and the game system 1 receives the video information and displays the video content and the advertisement information on the two display devices. In an example described below, a TV program which has been already broadcast (program which the user has missed) is provided as the video content, and the producer of the TV program (broadcaster) uses the transmission server 91 to provide the TV program to the game system 1.

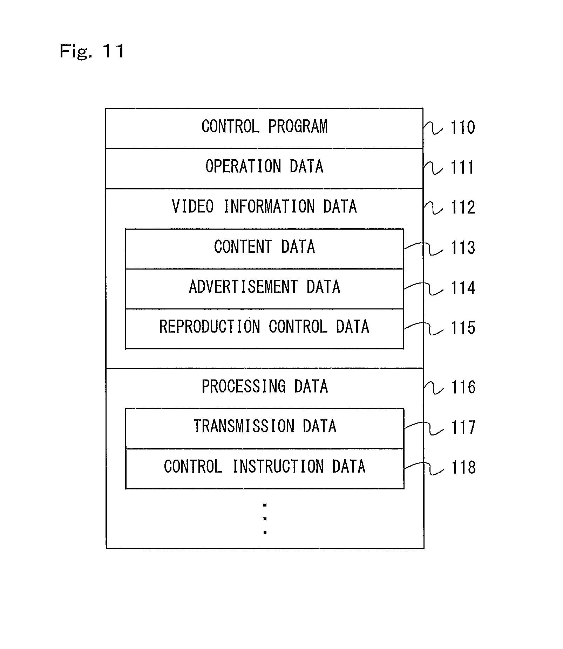

First, various types of data usable for the operation of the video display system 90 will be described. FIG 11 shows an example of data stored on a storage unit of the game device 3 (including the external main memory 12, the internal main memory 11e, and the flash memory 17). As shown in FIG. 11, a control program 110, operation data 111, video information data 112, and processing data 116 are stored on the storage unit of the game device 3. In addition to the data shown in FIG 11, various types of data usable for a process executed by the game device 3 (image data, sound data and the like) are stored on the storage unit. The data shown in FIG. 11 may be stored on any other storage device accessible to the game device 3, as well as on the storage unit in the game device 3.

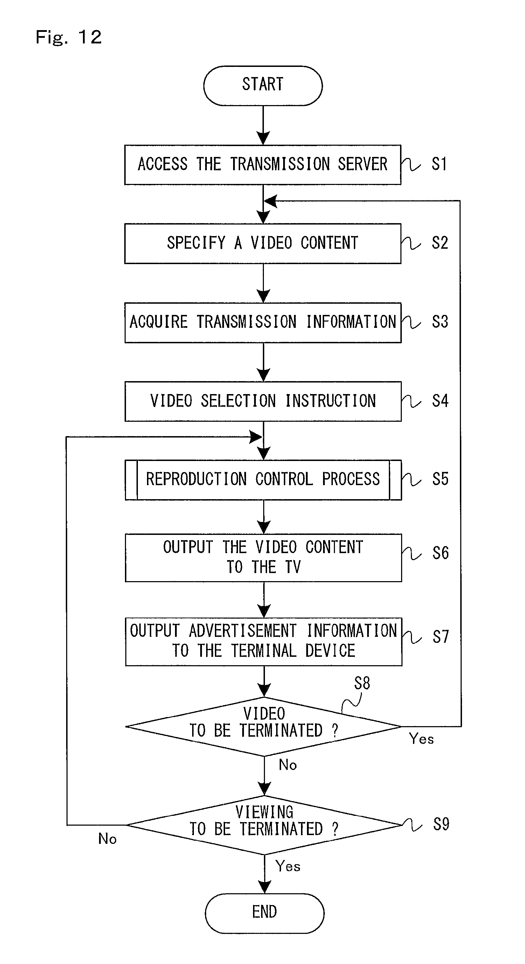

The control program 110 is a program for causing a CPU 110 to execute a process in the game device 3 (game system 1). In the example embodiment, the CPU 110 executes the control program 110, and thus steps shown in the flowchart shown in FIG. 12 are executed. The control program 110 is partially or entirely read from the flash memory 17 at an appropriate timing after the game device 3 is powered on, and thus is stored on the storage unit. The control program 110 may be acquired from the optical disc 4 or another device external to the game device 3 (e.g., via the Internet), instead of from the flash memory 17.

The operation data 111 is data representing an operation performed by a player on the terminal device 7 (terminal operation data). The operation data 111 is transmitted from the terminal device 7, acquired by the game device 3, and stored on the storage unit. The game device 3 is communicable with a plurality of terminal devices, and can acquire operation data from each of the plurality of terminal devices. In the case where there are a plurality of terminal devices, terminal operation data transmitted from each of the terminal devices is stored on the storage unit. On the storage unit, a predetermined number of pieces of terminal operation data may be stored sequentially from the latest data (the last data acquired) for each terminal device.

In the example embodiment, the operation data 111 includes angular velocity data, acceleration data, operation button data, stick data, touch position data, and azimuthal direction data. The angular velocity data is data representing an angular velocity detected by the gyrosensor 74. The acceleration data is data representing an acceleration (acceleration vector) detected by the acceleration sensor 73. The operation button data is data representing an input state on each of the operation buttons 54A through 54L provided in the terminal device 7. Specifically, the operation button data represents whether each of the operation buttons 54A through 54L has been pressed or not. Stick data is data representing a direction in which and a magnitude by which the stick portion of each of the analog sticks 53 (analog sticks 53A and 53B) has been slid (or tilted). The touch position data is data representing a position on the input surface of the touch panel 52 at which an input has been made (touch position). In the example embodiment, the touch position data represents coordinate values of a two-dimensional coordinate system which indicate the position on the input surface. In the case where the touch panel 52 is of the multi-touch type, the touch position data may represent a plurality of touch positions. The azimuthal direction data is data representing an azimuthal direction detected by the magnetic sensor 72.

The operation data 111 may include either one of the above-mentioned types of data included in the operation data 111 in the example embodiment. In the case where the terminal device 7 includes another input means (e.g., touch pad, image-capturing means of the controller 5, or the like), the operation data 111 may include data representing an operation on the another input means.

The video information data 112 is data representing the video information acquired by the game device 3. In the example embodiment, the video information data 112 includes content data 113, advertisement data 114, and reproduction control data 115. The content data 113 is data representing the video content included in the video information. The advertisement data 114 is data representing the advertisement information included in the video information. The reproduction control data 115 is data representing an instruction to control reproduction of the advertisement information by the terminal device 7 (reproduction control instruction).

The processing data 116 is data usable in a video display process (FIG. 12) described later. The processing data 116 includes transmission data 117 and control command data 118. In addition to the data shown in FIG. 11, the processing data 116 includes various types of data usable in the control program 110.

The transmission data 117 represents transmission information to be transmitted to the transmission server 91 from the game system 1 (game device 3). The transmission data 117 represents attribute information on the user and/or current information. The attribute information is information regarding the user of the game system 1, for example, the age, address (district in which the user resides), the family structure or the like of the user. The current information represents a current state (e.g., current time, current weather, etc.). In the example embodiment, the transmission data 117 includes both of the data representing the attribute information and the data representing the current information.

The control command data 118 is data representing a control command for controlling the TV 2. In the example embodiment, data representing various types of control commands for causing the TV 2 to perform various types of operations is stored on the storage unit in the game device 3 in advance. The control command data 118 represents the control command to be transmitted to the TV 2 among these various types of control commands.

Now, with reference to FIGS. 12 through 17, processes executed by the game device 3 in the example embodiment will be described in detail. FIG. 12 is a main flowchart showing an example of process flow executed by the game device 3 in the example embodiment. When the game device 3 is powered on, the CPU 10 of the game device 3 executes a boot program stored on a boot ROM (not shown) to initialize units including the main memory (external main memory 12 or internal main memory 11e). Then, the control program 110 stored on the flash memory 17 is read into the main memory, and the CPU 10 starts executing the control program 110. The flowchart shown in FIG. 12 shows the process executed after the above-described process is completed. The game device 3 may be configured to execute the control program 110 soon after being powered on. Alternatively, the game device 3 may be configured as follows. After the game device 3 is powered on, a built-in program for displaying a predetermined menu screen is executed, and then it is instructed to boot the control program 110 by, for example, a selection operation on the menu screen. In response to this, the control program 110 is executed.

The steps shown in each of the flowcharts shown in the figures are merely examples, and the processing order of the steps may be exchanged as long as substantially the same results are provided. The values of the variables and the threshold values used in determination steps are also merely examples, and other values may be adopted when necessary. In this specification, each of the steps in the flowcharts will be described as being executed by the CPU 10. Alternatively, the steps in the flowcharts may be partially executed by a processor other than the CPU 10 or a dedicated circuit.

First, in step S1, the CPU 10 accesses the transmission server 91. Specifically, the CPU 10 requests the transmission server 91 for a selection image usable for selecting a video content, and acquires and displays the selection image. The selection image is, for example, a web page which introduces video contents. In the case where there are a plurality of accessible servers (e.g., in the case where a transmission server is installed for each of a plurality of broadcasters), the CPU 10 may specify the transmission server to access in accordance with a predetermined condition. For example, the transmission server may be specified in accordance with an instruction of the user or based on the attribute information on the user described later. Any specific method for specifying the transmission server is usable. For example, the CPU 10 may access a server which provides a web page linked to the transmission servers so that the user can specify the transmission server on the web page.

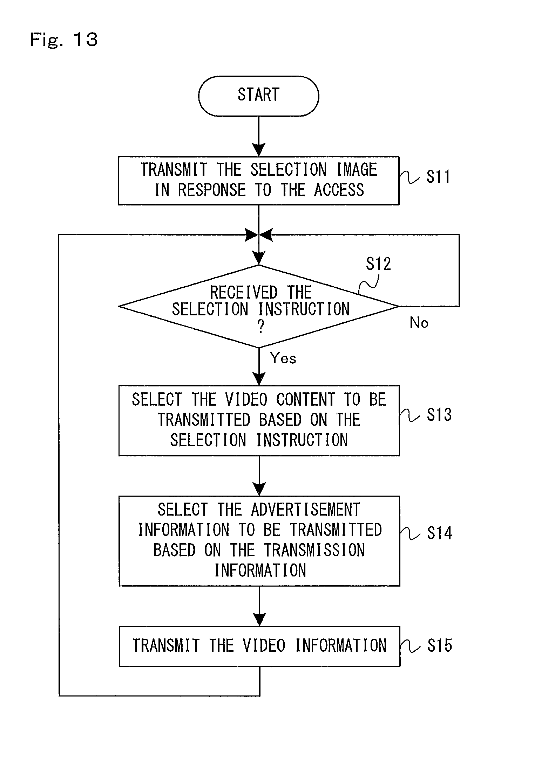

In step S1, the CPU 10 transmits an acquisition request for acquiring the selection image to the transmission server 91. Specifically, the CPU 10 stores data on the acquisition request in a predetermined area of the flash memory 17 as data to be transmitted to the network 92. The input/output processor 11a transmits the data on the acquisition request stored on the flash memory 17 to the network 92 at a predetermined timing. Owing to this, the data on the acquisition request is transmitted to the transmission server 91. When the acquisition request is received by the transmission server 91, the selection image is transmitted from the transmission server 91 to the game device 3. Hereinafter, with reference to FIG. 13, the process executed by the transmission server 91 will be described.

FIG. 13 is a main flowchart showing an example of process flow executed by the transmission server 91 in the example embodiment. A series of processes shown in FIG. 13 is executed by the processing unit 12 of the transmission server 91 for executing a predetermined control program. The processes shown in FIG. 13 is started in response to an access made to the transmission server 91 by the game system 1. When the access from the game system 1 is discontinued, the processing unit 102 terminates the processes shown in FIG. 13. In the case where a plurality of game systems access the transmission server 91, the processing unit 102 executes the process shown in FIG. 13 in parallel for the plurality of game systems.

First, in step S11, the processing unit 102 transmits the selection image in response to the acquisition request from the game device 3. At this point, the data on the web page of the selection image has been stored on a predetermined storage unit of the transmission server 91. The processing unit 102 reads the data and transmits the data to the game device 3 via the communication unit 101. After the process of step 11, the transmission server 91 executes step 12 described later.

As a result of the process of step S11, the game device 3 receives the selection image. The CPU 10 outputs the received selection image to at least one of the two display devices (TV 2 and terminal device 7) and displays the selection image. In step S1, the image displayed on the side of the game system 1 (selection image, etc.) may be displayed on the TV 2 or on the terminal device 7. In the case where the image is displayed on the terminal device 7, the user can operate the image easily by use of the touch panel 52 or the like and also can use the TV 2 for another purpose, which is convenient. The operation by the user in step S1 may be performed in any manner. In the example embodiment, the operation by the user in step S1 is performed by use of the terminal device 7. After the process in step S1 described above, the process of step S2 is executed.

In step S2 shown in FIG. 12, the CPU 10 specifies the video content to be reproduced. Specifically, the CPU 10 accepts, from the user, a selection operation of selecting one of the video contents included in the selection image and specifies the video content selected by the selection operation. The selection operation may be performed in any manner. In the example embodiment, the selection operation is performed by use of the terminal device 7. For example, a selection image including an image representing each video content is displayed on the terminal device 7, and in response to the operation of touching the image representing a certain video content, the certain video content is specified. When the video content is specified, the CPU 10 stores data on the information identifying the specified video content (referred to as "identified information", for example, ID attached to the video content) on the main memory. After the process of step S3, the process of step S3 is executed.

In step S3, the CPU 10 acquires the transmission information to be transmitted to the transmission server 91. In the example embodiment, attribute information representing the attribute of the user and current information representing the current state are acquired as the transmission information. The transmission information may be acquired in any manner. For example, the CPU 10 may acquire information stored on the game device 3 (game system 1) in advance. In the case where, for example, attributer information on the age, the district of residence, the family structure or the like of the user is registered in the game system 1 in advance, such attribute information may be acquired as the transmission information. In the case where attribute information on a plurality of users is registered, the CPU 10 may identify the user who is currently using the terminal device 7 based on, for example, an image of the user captured by the camera 56 of the terminal device 7 to acquire the attribute information on the user. The CPU 10 may acquire transmission information on the current information on the current weather or the like from an external device via the network 92. Data representing the transmission information acquired as described above is stored on the main memory as the transmission data 117. After the process of step S3, the process of step S4 is executed.

In step S4, the CPU 10 issues a selection instruction on the video information (acquisition request) to the transmission server 91. The selection instruction includes the above-mentioned identifying information and transmission information. Specifically, the CPU 10 reads data on the identifying information and the transmission data 117 from the main memory, and generates selection instruction data including the read data. The selection instruction data is transmitted to the transmission server 91 in substantially the same manner as the acquisition request in step S1. After the process of step S4, the game device 3 executes the process of step S5.

In response to the selection instruction on the video information being transmitted to the transmission server 91 by the process of step S4 executed by the game system 1, the video information is transmitted from the transmission server 91. Specifically, in step S12 after step S11, the processing unit 102 of the transmission server 91 determines whether the selection instruction on the video information has been received or not. When the determination result of step S12 is positive, the process of step S13 is executed. By contrast, when the determination result of step S12 is negative, the process of step S12 is executed again. Namely, the processing unit 102 waits until the selection instruction is received from the game device 3, and upon receipt thereof, executes the process of step S13.

In step S13, based on the selection information on the video information, the processing unit 102 selects the video content to be transmitted (video content to be displayed on the TV 2). Specifically, among video contents stored on the video storage unit 103, the video content which is identified by the ID included in the selection instruction is selected as the video content to be transmitted. After the process of step S13, the process of step S14 is executed.

In step S14, based on the transmission information included in the selection instruction on the video information, the processing unit 102 selects the advertisement information to be transmitted. The advertisement information selected in this step is the advertisement information to be displayed on the terminal device 7 when the video content selected in step S13 is displayed on the TV 2. Specifically, among advertisement information stored on the advertisement storage unit 104, the advertisement information corresponding to the transmission information is selected as the advertisement information to be transmitted. The selection of the advertisement information based on the transmission information may be performed in any specific manner. For example, the transmission server 91 prepares, in advance, correspondence information which represents the correspondence between a condition regarding a predetermined item included in the transmission information (e.g., the condition that the age of the user is between 30 and 40, or the condition that the district where the user resides is in a predetermined district) and advertisement information which is to be selected when such a condition is fulfilled. In step S14, the CPU 10 uses the correspondence information to select the advertisement information corresponding to the transmission information. In the case where the reproduction time duration of one piece of advertisement information is shorter than the reproduction time duration of the video content selected in step 13, a plurality of pieces of advertisement information may be selected. The advertisement information to be selected may be changed in accordance with the video content. Namely, information which represents the correspondence between video contents and advertisement information which is to be reproduced when each of the video contents is reproduced may be prepared; and in step S14, the CPU 10 may select the advertisement information to be transmitted among the advertisement information corresponding to the video content selected in step S13. After the process of step S14, the process of step S15 is executed.

As described above, in the example embodiment, the game device 3 acquires the transmission information representing the attribute of the user and/or the current state (step S3), and transmits the transmission information to the transmission server 91 (step S4). Based on the transmission information, the transmission server 91 determines the advertisement information to be transmitted to the game device 3, which is an addressee of the received transmission information (step S14). According to the example embodiment, the transmission server 91 can present the viewer with the advertisement information corresponding to the attribute of the viewer of the video content or the current state. Owing to this, appropriate advertisement information corresponding to the age, the district of residence or the like of the viewer is presented, or appropriate advertisement information corresponding to the time or the like when the video content is to be viewed is presented. Thus, the advertizing effect can be improved.

In step S15, the processing unit 102 transmits the video information to the game device 3. The video information includes the video content and the advertisement information selected in steps S13 and S14. The video information may be transmitted in any manner. In the example embodiment, the processing unit 102 performs streaming transmission of the video information. Specifically, the processing unit 102 reads the video contents stored on the video storage unit 103 and the advertisement information stored on the advertisement storage unit 104, and transmits the moving images of the video contents and the advertisement information in succession. In the case where, for example, the advertisement information does not need to be transmitted for the same time duration as that of the video content (e.g., in the case where the advertisement information is reproduced by the terminal device 7 in repetition), only the video content may be transmitted temporarily. In other embodiments, the game device 3 may first download the entirety of the video information and then reproduce the video information. The transmission server 91 may process, for example, encrypt the video information, and the video information may be decoded on the side of the game system 1. In this case, the video content and the advertisement information may be encrypted separately, or the video information including the video content and the advertisement information may be encrypted.

As described above, in the example embodiment, the transmission server 91 transmits the video information including a combination of the video content and the advertisement information to the game system 1. Owing to this, the video content and the advertisement information which is to be presented together with the video content can be transmitted as a set. This allows the side of the transmission server (broadcaster) to adjust the content of advertisement easily.

In the example embodiment, the transmission server 91 performs streaming transmission of the video content and the advertisement information including a moving image to the game device 3. In this case, the game device 3 outputs the video content received in succession to the TV 2 in succession while transmitting the advertisement information received in succession to the terminal device 7 in succession (steps S6 and S7 described later). Owing to this, predetermined advertisement information can be reproduced at an appropriate timing in accordance with a specific content of the video content. For example, predetermined advertisement information is reproduced at a timing when the video content provides a predetermined specific content (e.g., in the case where the video content is a relay broadcasting program of a baseball game, at a timing when the offense and defense are exchanged), and thus the advertizing effect of the advertisement information can be improved. According to the example embodiment, advertisement information suitable to the video content can be transmitted from the side of the server 91 easily. Therefore, advertisement information suitable to the video content can be presented to the user (viewer), and thus the advertizing effect can be further improved.

In the example embodiment, the video information may include a reproduction control instruction. The reproduction control instruction is an instruction to control the reproduction of the advertisement information by the terminal device 7. For example, the reproduction control instruction may be an instruction to reproduce the advertisement information, which is a target of control, in repetition. Alternatively, the reproduction control instruction may be an instruction to reproduce the advertisement information, which is a target of control, in response to the reproduced specific content of the video content reaching a predetermined state (e.g., in response to a predetermined specific content having been reproduced, or in response to a predetermined time duration having passed from the start of the reproduction). The reproduction control instruction may be issued in the form of data representing a condition for reproduction or in the form of a program executable by the game device 3. In step S15, the CPU 10 transmits the video information in the state of including the reproduction control instruction at an appropriate timing during the streaming transmission of the video information. For example, the reproduction control instruction may be transmitted before the advertisement information, which is a target of control, is transmitted.

The transmission of the video information in step S15 is continued until the entirety of the video information is transmitted. When the transmission of the video information is completed, the process of step S12 is executed again. After this, the processing unit 102 executes the processes of steps S12 through S15 in repetition until the access to the transmission server 91 by the game system 1 is discontinued.

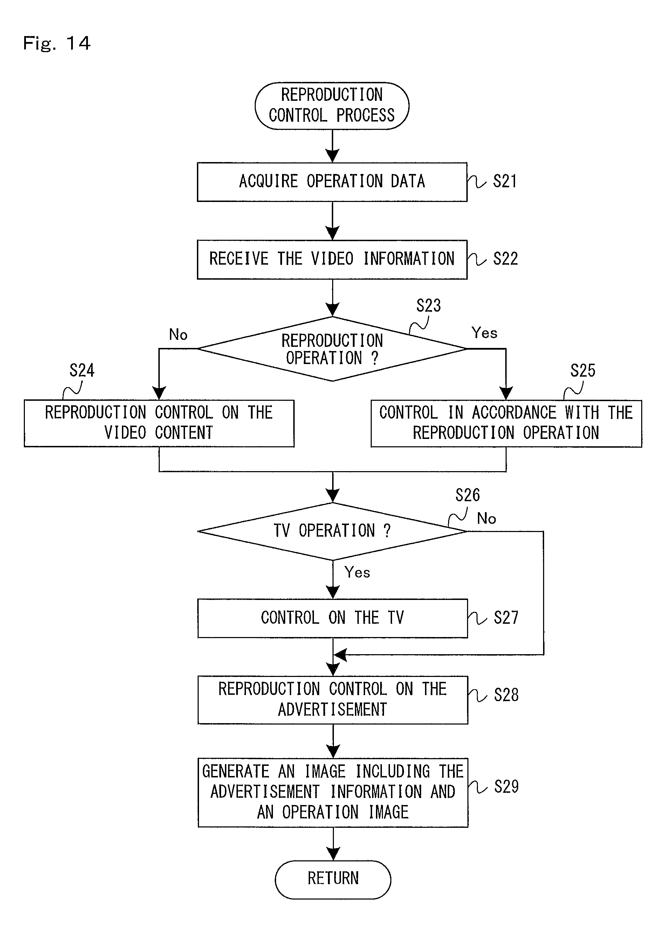

Returning to FIG. 12, in step S5, the CPU 10 executes the reproduction control process. The reproduction control process is a process of causing the video content and the advertisement information included in the video information from the transmission server 91 to be displayed on the two display devices. In the example embodiment, the reproduction control process is executed in repetition at a rate of once in a predetermined time duration (1 frame time). Hereinafter, with reference to FIG 14, the reproduction control process will be described in detail.

FIG 14 is a flowchart showing an example of process flow of the reproduction control process shown in FIG. 12 (step S5) in detail. The reproduction control process is executed as follows. First, in step S21, the CPU 10 acquires the operation data (terminal operation data) transmitted from the terminal device 7. The terminal device 7 transmits the terminal operation data to the game device 3 in repetition, and thus the game device 3 receives the terminal device operation in succession. In the game device 3, the terminal communication module 28 receives the terminal operation data in succession, and the input/output processor 11a stores the terminal operation data on the main memory in succession. In step S21, the CPU 10 reads the latest terminal operation data 111 from the main memory. After the process of step S21, the process of step S22 is executed.

In step S22, the CPU 10 receives (acquires) the video information transmitted from the transmission server 91. Namely, the data received from the transmission server 91 is stored on the flash memory 17. Specifically, the data representing the video content included in the video information is stored on the flash memory 17 as the content data 113, the data representing the advertisement information included in the video information is stored on the flash memory 17 as the advertisement data 114, and the data representing the reproduction control instruction is stored on the flash memory 17 as the reproduction control data 115. Since the transmission server 91 transmits the video information in succession by streaming transmission, each type of the data included in the video information is stored on the flash memory 17 in succession. Among the data stored on the flash memory 117, data on the image (moving image or still image) which has been reproduced may be erased when appropriate. After the process of step S22, the process of step S23 is executed.

In step S23, the CPU 10 determines whether an operation regarding the reproduction of the video content (reproduction operation) has been performed or not. The reproduction operation may be any operation which instructs to control the reproduction of the video content. In the example embodiment, the reproduction operation is an operation of reproducing the video content, stopping the reproduction, or temporarily pausing the reproduction. In other embodiments, the reproduction operation may be an operation of, for example, fast-forwarding or reversing the reproduction of the video content, or an operation of, for example, adjusting the volume of the sound which is output together with the video content. The reproduction operation may be performed in any manner. In the example embodiment, the reproduction operation is performed by use of the terminal device 7. In the example embodiment, the user can perform the reproduction operation by use of the touch panel 52, which will be described later in detail regarding step S29. In step S23, the process is executed as follows specifically. Based on the operation data read in step S21, the CPU 10 determines whether the reproduction operation has been performed or not. When the determination result of step S23 is negative, the process of step S24 is executed. By contrast, when the determination result of step S23 is positive, the process of step S25 is executed.

In step S24, the CPU 10 controls the reproduction of the video content. Specifically, the CPU 10 specifies an image of a video content to be output to the TV 2 among the images of the video contents stored on the flash memory 17. In step S24, the video contents are specified in a time series such that normal reproduction is performed. After the process of step S24, the process of step S26 described later is executed.

In step S25, the CPU 10 controls the reproduction of the video content in accordance with the reproduction operation. Specifically, the CPU 10 specifies an image among the images of the video contents stored on the flash memory 17 such that the image of the video content to be output to the TV 2 is suitable to the reproduction operation (fast-forwarding, reversing, pausing, etc.). After the process of step S25, the process of step S26 is executed.

In the example embodiment, the user can perform an operation on the TV 2 by use of the terminal device 7. Specifically, the TV 2 receives a control signal, generated in accordance with an operation performed by the user on the terminal device 7, from the terminal device 7 or the game device 3, and performs an operation in accordance with the control signal. Hereinafter, the processes of steps S26 and S27 for controlling the operation of the TV 2 will be described in detail.

In step S26, the CPU 10 determines whether an operation for controlling the TV 2 (TV operation) has been performed or not. The TV operation may be any operation which instructs to control the operation of the TV 2. In the example embodiment, the TV operation is an operation of, for example, turning ON/OFF the power of the TV 2, increasing or decreasing the sound volume, or changing the display mode. In other embodiments, in the case where the TV 2 can control the reproduction of the video content, the TV operation may be an operation (on the TV 2) regarding the reproduction of the video content, for example, an operation of reproducing the video content, or fast-forwarding or reversing the reproduction. The TV operation may be performed in any manner. In the example embodiment, the TV operation is performed by use of the terminal device 7. In the example embodiment, the user can perform the TV operation by use of the touch panel 52, like the reproduction operation, which will be described later in detail. In step S26, the process is executed as follows specifically. Based on the operation data read in step S21, the CPU 10 determines whether the TV operation has been performed or not. When the determination result of step S26 is positive, the process of step S27 is executed. By contrast, when the determination result of step S26 is negative, the process of step S27 is skipped and the process of step S28 is executed.

In step S27, the CPU 10 controls the TV 2 in accordance with the TV operation performed by the user. Specifically, a control command for causing the TV 2 to perform an operation in accordance with the TV operation is generated and is output to the TV 2. The CPU 10 stores the control command data 118 representing the control command on the storage unit. The TV 2 may be controlled by the control command in any manner. In the game system 1 in the example embodiment, the TV 2 can be controlled by a first method and/or a second method described below.

According to the first method, the terminal device 7 transmits a control signal regarding the reproduction and/or the display of the video content to the TV 2 in response to an operation performed by the user on the terminal device 7, and the TV 2 performs an operation in accordance with the control signal from the terminal device 7. In the example embodiment, the CPU 10 transmits, to the terminal device 7, an instruction to cause the infrared communication module 82 to output an infrared signal corresponding to the control command represented by the control command data 118. In response to this instruction, the codec LSI 76 of the terminal device 7 outputs the infrared signal corresponding to the control command to be output to the infrared communication module 82. As a result of the infrared signal being received by the infrared reception unit of the TV 2, the TV 2 performs an operation in accordance with the control command. In the example embodiment, the terminal device 7 controls the TV 2 by infrared communication using an infrared reception function owned by a general TV. Therefore, a general TV can be used easily as the display device, and thus a system usable for a variety of applications can be provided.

According to the second method, the game device 3 outputs the control signal to the TV 2, and the TV 2 performs an operation in accordance with the control signal. Specifically, in the example embodiment, the CPU 10 outputs the control signal corresponding to the control command represented by the control command data 118 to the TV 2 via the AV connector 16. The game system 1 controls the operation of the TV 2 by at least either the first method or the second method. After the process of step S27, the process of step S28 is executed.

As described above, in the example embodiment, the terminal device 7 includes an operating unit for accepting an operation performed by the user, and transmits the operation data representing an operation performed on the operating unit to the game device 3. The game device 3 acquires the operation data (step S21), and performs control regarding the reproduction and/or the display of the video content on the TV 2 based on the operation data (steps S25 and S28). In the example embodiment, the "control regarding the reproduction of the video content" is the control in the process of step S25. In the example embodiment, the "control regarding the display of the video content" is the control of turning ON/OFF the TV 2 in the process of step S28. As described above, in the example embodiment, the user can perform an operation on the video content by use of the terminal device 7. According to the example embodiment, the user views the terminal device 7 when performing an operation on the video content. At this point, it is possible to direct the user's attention to also the advertisement information displayed on the terminal device 7. Namely, in the example embodiment, an operation on the video content is allowed to be performed by use of the terminal device 7 (which displays the advertisement information), and thus it is possible to direct the user's attention also to the advertisement information displayed on the terminal device 7 during the reproduction of the video content. This can improve the advertizing effect of the advertisement information.

In step S28, the CPU 10 performs reproduction control on the advertisement information. Specifically, the CPU 10 specifies an image to be output to the terminal device 7 among images of the advertisement information stored on the flash memory 17. The specification of the image in step S28 may be performed in any manner. In the example embodiment, in the case where there is a reproduction control instruction from the transmission server 91, the image is specified in accordance with the reproduction control instruction. By contrast, in the case where is no reproduction control instruction from the transmission server 91, the images are specified in a time series such that normal reproduction is performed. Specifically, the CPU 10 determines whether the reproduction control data 115 is stored on the flash memory 17 or not. When the reproduction control data 115 is stored, the CPU 10 reads the reproduction control data 115 and specifies the image such that the advertisement information is reproduced in accordance with the reproduction control instruction. By contrast, when the reproduction control data 115 is not stored, the CPU 10 specifies the images such that the images are reproduced in a time series.

As described above, in the example embodiment, the transmission server 91 transmits the video information including the reproduction control instruction regarding the reproduction of the advertisement information (step S15), and the CPU 10 controls the reproduction of the advertisement information in accordance with the reproduction control instruction (step S28). Owing to this, the reproduction of the advertisement information by the terminal device 7 can be controlled on the side of the transmission server 91 more easily. For example, the advertisement information can be reproduced in a form described below.

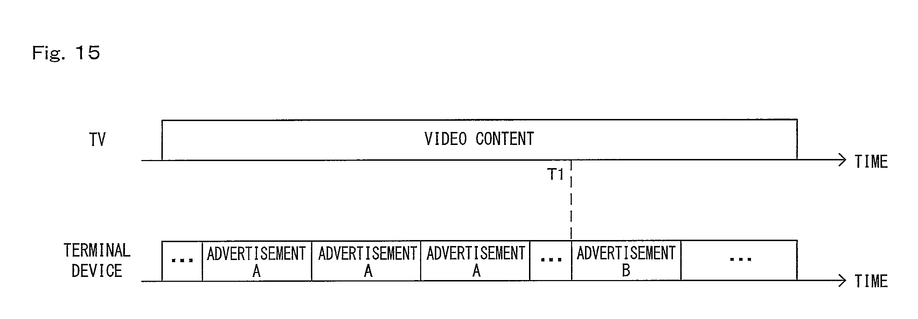

FIG. 15 shows an example of content to be reproduced by the TV 2 and the terminal device 7. In the example embodiment, as shown in, for example, FIG. 15, the CPU 10 may control a predetermined advertisement A to be reproduced in repetition in accordance with the reproduction control instruction (in this case, the reproduction time duration of the predetermined advertisement A is shorter than that of the video content to be reproduced by the TV 2). The advertisement A is, for example, a commercial provided as one piece of advertisement information. Owing to this, the moving image of the advertisement information is reproduced in repetition, and thus the advertizing effect can be improved. In addition, the use of the reproduction control instruction can reduce the amount of data of the video information to be transmitted from the transmission server 91.

The CPU 10 may control the reproduction of the advertisement information by the terminal device 7 such that predetermined advertisement information is reproduced by the terminal device 7 at a timing when the specific content of the video content reaches a predetermined state. Specifically, as shown in FIG. 15, the CPU 10 may control the reproduction such that a predetermined advertisement B is reproduced by the terminal device 7 at a timing T1 when the video content reproduced by the TV 2 reaches a predetermined state.

The predetermined state may be any state, and the timing may be any timing. The timing T1 is, for example, a timing when the user is assumed to terminate the viewing (attention) of the video content, or a timing when the user's attention is assumed to be diverged from the video content. Specifically, in the case where the video content is a relay broadcasting program of a baseball game, the timing T1 may be a timing when the offense and defense are exchanged. In the case where the video content include a commercial, the timing T1 may be a timing when the video content is switched from the TV program to the commercial. In this manner, the predetermined advertisement B is reproduced by the terminal device 7 at a timing when the attention of the user is assumed to be diverged from the video content displayed on the TV 2. Owing to this, it is possible to cause the user to notice the advertisement B easily, which can improve the advertizing effect of the advertisement B.

The advertisement information may be related to the specific content of the video content. In this case, the timing T1 may be, for example, a timing when the content related to the advertisement B is reproduced as the video content. Specifically, in the case where the video content includes advertizing moving images (commercials), at a timing when a predetermined advertizing moving image in the video content is reproduced (during or immediate after the reproduction), the CPU 10 may reproduce the advertisement B related to the predetermined advertizing moving image by the terminal device 7. Alternatively, at a timing when a product is displayed in the video content, the CPU 10 may reproduce the advertisement B regarding the product by the terminal device 7. As described above, the CPU 10 may output advertisement information to the terminal device 7 such that advertisement information corresponding to the specific content of the video content to be reproduced by the TV 2 is reproduced by the terminal device 7. Owing to this, regarding the product or the like introduced in the video content reproduced by the TV 2, more detailed information can be provided to the user by the terminal device 7 immediately. Therefore, at a timing when the user wishes to view (obtain more detailed information of) the product, such detailed information can be provided to the user. This can improve the advertizing effect of the advertisement B. According to the above, for example, a continuation of the advertisement (commercial) included in the video content can be presented by the advertisement information displayed on the terminal device 7. Owing to this, the advertisement can be made more interesting to the user, which can improve the advertizing effect of the advertisement information.

As the advertisement B, a web page may be displayed as well as the moving image, the still image or the like. For example, in the case where the video content to be displayed on the TV 2 includes a URL, the web page of the URL may be displayed on the terminal device 7. More specifically, when the URL of a website of a sponsor is displayed in the commercial included in the video content, a page of the website may be displayed on the terminal device 7. Owing to this, the work of the user of inputting the URL can be omitted, and also the advertizing effect of the web page can be inlproved. An operation of purchasing the product using the website may be made possible. In this case, the specific content of the video content and the purchase screen can be associated with each other to provide a situation close to TV shopping, which provides a high advertizing effect. It may be made possible to input information for purchasing a product by a touch operation. The terminal device 7 may have a built-in RFID reader or may be connected to an RFID reader, and thus a card may be read for payment.

Timing information attached to the video content may be used to determine whether the specific content of the video content reaches the predetermined state or not. The timing information may be any information which can make the determination. For example, the timing information is a flag indicating that the video content reaches the predetermined state, or a time stamp attached to each of images included in the video content. The CPU 10 refers to the timing information to make the determination. This determination method allows the display timing of the advertisement information to be controlled and managed easily on the side of the transmission server 91 by use of the reproduction control instruction. In other embodiments, the determination may be made by the game device 3 analyzing the images of the video content.

In the example embodiment, the transmission server 91 uses the reproduction control instruction so that the display timing of the advertisement information is controlled in the game system 1 as shown in FIG. 15. In other embodiments, the transmission server 91 may control the display timing of the advertisement information as shown in FIG. 15 without using the reproduction control instruction (e.g., by streaming transmission or the like).

Returning to FIG. 14, in step S29 after step S28, the CPU 10 generates an image including the advertisement information and an operation image. In the example embodiment, the image generated in step S29 is displayed on the terminal device 7. The operation image is an image regarding the operation performed on the operating unit of the terminal device 7 (touch panel 52, buttons 54A through 54M, etc.). Specifically, the operation image may be an image of a button displayed on the terminal device 7 in order to allow an operation to be performed on the touch panel 52, or an image representing an operation performed by use of any of the buttons of the terminal device 7 (e.g., image representing "determine by button A" or "cancel by button B").

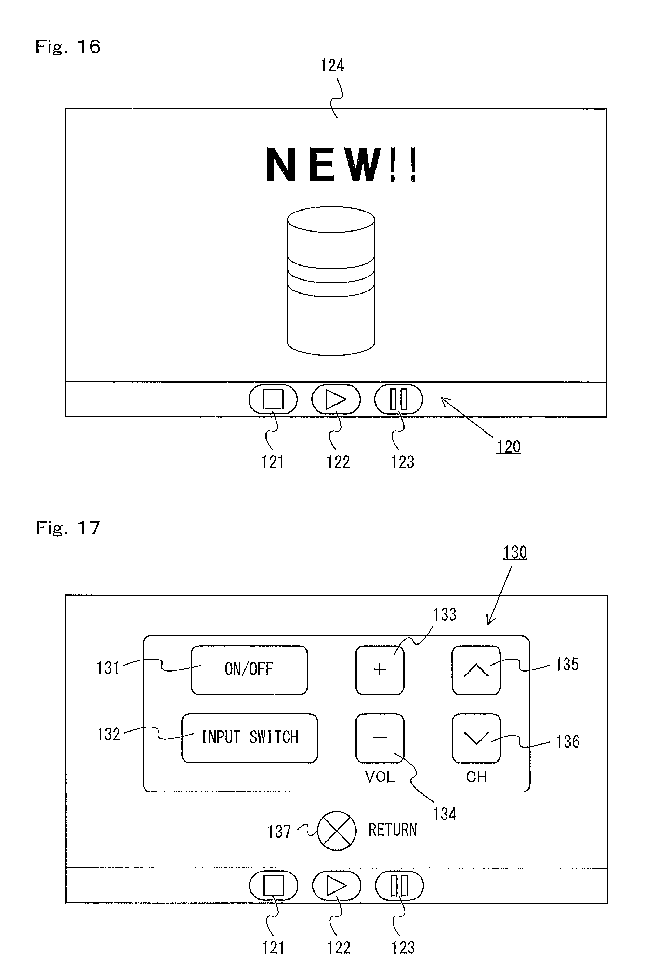

In the example embodiment, an image for performing an operation regarding the reproduction of the video content by the TV 2 (reproduction operation image) and/or an image for performing an operation on the TV 2 (TV operation image) is displayed on the terminal device 7 as the operation image. FIG. 16 shows an example of reproduction operation image. As shown in FIG. 16, the terminal device 7 displays a reproduction operation image 120 in addition to advertisement information 124. The reproduction operation image 120 includes a stop button 121, a reproduction button 122, and a pause button 123. The stop button 121 is an image representing an instruction to stop the reproduction of the video content. The reproduction button 122 is an image representing an instruction to reproduce the video content. The pause button 123 is an image representing an instruction to pause the reproduction of the video content. In other embodiments, an image representing an instruction to fast-forward or reverse the reproduction of the video content, an image representing a bar usable to issue an instruction to specify the reproduction position of the video content, or the like may be displayed as a reproduction operation image.

FIG. 17 shows an example of TV operation image. As shown in FIG. 17, a TV operation image 130 is displayed on the terminal device 7. Although not shown in FIG. 17 for the purpose of making the figure easier to see, the advertisement information 124 is displayed below the TV operation image 130 in the example embodiment. In other embodiments, the advertisement information 124 may not be displayed, or the TV operation image 130 may be displayed over the advertisement information 124 in a semitransparent state. As shown in FIG. 17, the TV operation image 130 includes a power button 131, an input switch button 132, a volume up button 133, a volume down button 134, a channel increase button 135, a channel decrease button 136, and a return button 137. The buttons 131 through 136 are each an image representing a control instruction on the TV 2. The power button 131 is an image representing an instruction to switch ON/OFF the power of the TV 2. The input switch button 132 is an image representing an instruction to switch the input to the TV 2 (e.g., switching the input between a mode of inputting and displaying a video of a TV program and a mode of inputting and displaying an image from the game device 3). The volume up button 133 is an image representing an instruction to increase a sound volume of the TV 2. The volume down button 134 is an image representing an instruction to decrease the sound volume of the TV 2. The channel increase button 135 is an image representing an instruction to switch the station of the TV 2 one by one in an ascending manner. The channel decrease button 136 is an image representing an instruction to switch the station of the TV 2 one by one in a descending manner. By use of each of the buttons 131 through 136, the user can perform an operation on the power, input switch, sound volume and station selection of the TV 2. The return button 137 is an image representing an instruction to stop the display of the TV operation image 130. In other embodiments, buttons provided in a remote control of a general TV, for example, a button representing each of channels, a button representing an instruction to display a program guide, a button representing an instruction to record (in the case where the game device 3 or the TV 2 has a recording function) and the like may be displayed on the terminal device 7, in addition to the above-mentioned buttons.

In the example embodiment, the reproduction operation in step S23 is an operation of touching any of the buttons 121 through 123 of the reproduction operation image 120. The TV operation in step S27 is an operation of touching any of the buttons 131 through 136 of the TV operation image 130. Namely, in the example embodiment, the user can perform a reproduction operation and a TV operation by use of the touch panel 52 of the terminal device 7. An input for these operations may be controlled at a timing during the reproduction of the video content. Specifically, the CPU 10 may partially or entirely control these operations at a predetermined timing while the video content is being displayed. For example, at a timing when a predetermined video is displayed, the CPU 10 may control such that an operation of stopping the display, fast-forwarding the display or the like is not accepted, or such that such a button is not displayed. Owing to such control, the video which the provider of the video content (the side of the transmission server) wishes to show can be viewed by the user without fail. For example, in the case where the video content include a commercial, the CPU 10 can control such that the commercial can be viewed without being skipped. An instruction to restrict the reproduction operation or the TV operation may be performed by the transmission server 91. Specifically, such an instruction may be transmitted from the transmission server 91 to the game system 1 together with the video information, and the CPU 10 may restrict the operation based on the received instruction.

In the example embodiment, in the case where a predetermined operation of causing the TV operation image 130 to be displayed is performed, the CPU 10 generates an image including the advertisement information 124 and the TV operation image 130 overlapped thereon (see FIG. 17). By contrast, in the case where the predetermined operation is not performed, the CPU 10 generates an image including the advertisement information 124 and the reproduction operation image 120 (FIG. 16). The predetermined operation may be any operation. For example, the predetermined operation may be an operation of pressing a predetermined button provided in the terminal device 7. Owing to this, the user can cause the TV operation image 130 to be displayed easily by one operation, which is convenient.

In step S29, the process is executed as follows specifically. The CPU 10 reads an image of the advertisement information to be displayed from the flash memory 17, and generates an image including the image and also the reproduction operation image 120 (and the TV operation image 130 when necessary). Such an operation image may be generated in any manner. In the example embodiment, image data usable for generating the reproduction operation image 120 and the TV operation image 130 is stored on the main memory or the like in advance. In other embodiments, the image data may be acquired from the transmission server 91 together with the video information as described later. The CPU 10 stores the generated image on the storage unit of the game device 3 (e.g., flash memory 17, main memory, or VRAM 11d). After step S29, the CPU 10 terminates the reproduction control process.

As described above regarding step S29, in the example embodiment, in the case where the video content is displayed on the TV 2, the terminal device 7 displays the operation image together with the advertisement information (FIG. 16 and FIG. 17). Owing to this, the user views the operation image when performing an operation on the video content. Therefore, it is possible to direct the user's attention also to the advertisement information displayed on the terminal device 7 together with the operation image. According to the process of step S29, the operation image is displayed on the terminal device 7, and thus the advertizing effect of the advertisement information can be further improved.

In the example embodiment, the terminal device 7 includes the touch panel 52, and the operation for performing control on the reproduction and/or the display of the video content on the TV 2 is performed by use of the touch panel 52. Therefore, the user can perform an operation perceptively and easily by use of the touch panel 52. When performing an operation by use of the touch panel 52, the user views the operation image. Therefore, it is possible to direct the user's attention to the advertisement information displayed together with the operation image, with certainty. This can improve the advertizing effect of the advertisement information.

In other embodiments, the reproduction operation may be partially or entirely set to be different in accordance with the transmission server 91 as an addressee of the video content and/or in accordance with the video content transmitted. For example, the transmission server 91 transmits information on the reproduction operation (information representing the correspondence between the content of the reproduction operation and the operation to be performed by the game device 3 in accordance with the reproduction operation) and data on the reproduction operation image together with the video information, and the game device 3 executes the process of step S25 using the information on the reproduction operation. The game device 3 also executes the process of step S29 using the received data on the reproduction operation image. Owing to this, the method of the reproduction operation can be controlled on the side of the transmission server 91, and thus an operation method suitable to the video content can be provided.

Returning to FIG. 12, in step S6 after step S5, the CPU 10 outputs the video content to the TV 2. First, the CPU 10 reads the content data 113 stored on the flash memory 17, and stores an image included in the moving image of the video content on the VRAM 11d. At this point, the CPU 10 and the GPU 11b generate an image from the data stored on the flash memory 17 when necessary. For example, in the case where the content data 113 stored on the flash memory 17 is compressed by a predetermined scheme, the data on the moving image is decompressed to generate an image. In the case where the data on the moving image is stored in units of packets, an image is generated from the data in units of packets. The image stored on the VRAM 11d is transferred to the AV-IC 15, and the AV-IC 15 outputs the image to the TV 2 via the AV connector 16. Owing to this, an image included in the moving image is displayed on the TV 2. A sound may be acquired from the transmission server 91 together with the moving image of the video content. In step S5, a sound may be output to the TV 2 together with the moving image and may be output from the speaker 2a of the TV 2. After the above-described process of step S6, the process of step S7 is executed.

In step S7, the CPU 10 outputs (transmits) the image of the advertisement information to the terminal device 7. Specifically, the data on the terminal image stored on the storage unit in step S29 is transferred to the codec LSI 27 by the CPU 10, and is compressed as predetermined by the codec LSI 27. The compressed image data is transmitted to the terminal device 7 by the terminal communication module 28 via the antenna 29. The terminal device 7 receives the image data, transmitted from the game device 3, by the wireless module 80, and the received image data is decompressed as predetermined by the codec LSI 76. The decompressed image data is output to the LCD 51. Owing to this, the terminal image is displayed on the LCD 51. After the process of step S7, the process of step S8 is executed.

The advertisement information including a sound together with the image may be acquired from the transmission server 91. In this case, in step S7, the sound may be transmitted to the terminal device 7 together with the image, and may be output from the speakers 77 of the terminal device 7. In the case where information on the sound to be reproduced together with the video content is included in the video information and is reproduced by the TV 2 together with the video content, the terminal device 7 may be controlled so as not to output the sound such that the reproduction by the TV 2 is not disturbed. Specifically, in this case, the advertisement information may be controlled so as not to include the sound information. In other embodiments, at the above-mentioned "timing when the video content to be reproduced by the TV 2 reaches a predetermined state (timing T1 shown in FIG 15)", the CPU 10 may notify the user of the timing by use of the terminal device 7. The timing may be notified to the user by, for example, outputting a sound from the terminal device 7 or by vibrating the vibrator 89 of the terminal device 7.

In step S8, the CPU 10 determines whether or not to terminate the reproduction of the video content by the TV 2. The determination in step S8 is made, for example, in accordance with whether the video content has been reproduced until the end or not, or in accordance with whether an instruction to stop the reproduction of the video content has been issued or not. When the determination result of step S8 is positive, the process of step S2 is executed again. Specifically, when the reproduction of the video content is terminated, the processing unit 102 specifies the video content to be reproduced next in accordance with an instruction by the user. By contrast, when the determination result of step S8 is negative, the process of step S9 is executed.

In step S9, the CPU 10 determines whether or not to terminate the viewing of the video content (and the advertisement information). The determination in step S9 is made, for example, in accordance with whether an instruction to terminate the viewing has been issued by the user or not. When the determination result of step S9 is negative, the process of step S5 is executed again. After this, while the reproduction of the video content is continued (while the determination results of steps S8 and S9 are negative), the CPU 10 executes the processes of steps S5 through S9 in repetition. By contrast, when the determination result of step S9 is positive, the CPU 10 terminates the process shown in FIG. 12.

As described above, in the example embodiment, the video content included in the video information transmitted from the transmission server 91 is displayed on the TV 2, and the advertisement information included in the video information is displayed on the terminal device 7. Owing to this, the advertisement information can be presented to the user effectively, and thus the advertizing effect can be improved.

In the case where a program which the user has missed is provided as the video content as in the example embodiment, it is possible to motivate the user who has viewed such a program to view TV broadcasting related to the program which he/she missed. In the case where a version for sample viewing of the video content is provided as the advertisement information, it is possible to motivate the user to view the video content. In this manner, according to the example embodiment, regardless of whether a TV program is provided as the video content (without charge) or for a charge, a video distribution system advantageous to the provider of the video content (broadcaster, etc.) can be constructed.

### [7. Modifications]

### (Modification in which related information is transmitted)

In the above embodiment, the advertisement information is transmitted as information to be transmitted together with the video content. In other embodiments, related information relating to the video content may be transmitted together with the video content, instead of the advertisement information. The related information is, for example, information related to the information introduced in the video content, additional information related to the video content or the like. Specifically, in the case where the video content is a cooking program, information on a recipe of a dish may be displayed on the terminal device 7 as the related information. In the case where the video content is a film or a TV drama, information on the cast may be displayed on the terminal device 7 as the related information. The related information includes advertisement information of a product introduced in the video content or advertisement information on the video content itself. In the case where the video content includes an advertisement, advertisement information related to the advertisement can be the related information. Namely, such advertisement information may be displayed on the terminal device 7 as the related information. In the case where the related information is displayed on the terminal device 7 as described above, the related information can be displayed for the same time duration as the reproduction time duration of the video content. Therefore, a larger amount of information regarding the video content can be presented to the user. In the case where the related information is displayed on the terminal device 7, like in the case of the advertisement information, the related information displayed on the terminal device 7 is not displayed on the TV 2. Therefore, the related information does not disturb the video content displayed on the TV 2, and thus the video content can be presented to the user in an easy-to-view manner.

### (Modification in which advertisement information is transmitted during TV broadcasting)

In the above embodiment, in the case where the video content transmitted from the transmission server 91 is displayed on the TV 2, advertisement information is displayed on the terminal device 7. In other embodiments, in the case where a TV program received by TV broadcasting is displayed on the TV 2, advertisement information (or related information) may be displayed on the terminal device 7. In this case, it is conceivable that the video display system operates as follows.

The game device 3 first acquires program selection information usable for selecting a TV program (e.g., information on the electronic program guide) from a predetermined server. In response to the acquisition request from the game device 3, the server transmits the program selection information to the game device 3. Upon receipt of the program selection information , the game device 3 causes the terminal device 7 or the TV 2 to display the program selection information. In accordance with, for example, an operation performed by the user on the terminal device 7, the game device 3 specifies a TV program to be viewed among a plurality of TV programs included in an image of the program selection information. The game device 3 also transmits information on the specified TV program to the server as transmission information. The transmission information may include attribute information or current information, like in the above embodiment. Upon receipt of the transmission information, the server transmits advertisement information to the game device 3. The advertisement information to be transmitted may be selected in accordance with the attribute information and/or the current information included in the transmission information like in the above embodiment, or may be selected in accordance with the specified TV program. The server may transmit the advertisement information of a content suitable to the TV program specified by the game device 3. Meanwhile, the game device 3, after specifying the TV program, controls the TV 2 such that the program is received and displayed. The game device 3 also causes the advertisement information transmitted from the server to be displayed on the terminal device 7. Owing to the above, the game system 1 can display the TV program by the TV broadcasting on the TV 2 and also display the advertisement information on the terminal device 7.

### (Modification in which a plurality of terminal devices are included)

In the above embodiment, the video display system 90 includes one terminal device 7. In other embodiments, the video display system may include a plurality of terminal devices 7. In the case where there are a plurality of terminal devices, the terminal devices may display different advertisement information and/or related information or the same advertisement information and/or related information. For example, one terminal device may display advertisement information while another terminal device may display related information. In this manner, in the case where there are a plurality of terminal devices, more diversified information can be provided to the user.

### (Modification regarding information processing device for executing game processes)

In the above embodiment, a series of information processes to be executed by the game system 1 (FIG. 12) is executed by the game device 3. A part of such information processes may be executed by another device. For example, in other embodiments, a part of the information processes (e.g., generation of the terminal image) or the entirety thereof may be executed by the (terminal device 7. In the case where the entirety of the information processes is executed by the terminal device 7, the terminal device 7 may be communicable with the transmission server 91 while the game system 1 may not include the game device 3. In still other embodiments, in a system including a plurality of information processing devices communicable with each other, the plurality of information processing devices may execute the information processes in a shared manner.

In the case where the plurality of information processing devices execute the information processes, the processes to be executed by the information processing devices are synchronized. Therefore, the information processes become complicated. By contrast, in the case where the information processes are executed by one game device 3 and the terminal device 7 executes the process of receiving and displaying the image as in the example embodiment (namely, in the case where the terminal device 7 acts as a thin client terminal), there is no need to synchronize the information processes among the plurality of information processing devices and thus the information processes can be simplified. In the case where there is the game system 1 using the TV 2 and the terminal device 7, the game system 1 can be applied to view the video content and the advertisement by the example embodiment. Thus, the system can be provided easily.

In other embodiments, even in the case where the game system 1 is not used, a combination of the video content and the advertisement can be presented in substantially the same manner as above. For example, information devices such as a set top box (receiving device) connected to a TV and a tablet terminal (terminal device) may be used. In the case of a structure using a set top box and a tablet terminal, the video content and the advertisement information included in the video information may be respectively distributed to the set top box and the tablet terminal by a router or the like so that the set top box and the tablet terminal respectively display the video content and the advertisement information. Alternatively, when synchronization is performed, the video content and the advertisement information are received by the set top box and the tablet terminal respectively and reproduced in association with each other. Specifically, the transmission server 91 may transmit the video information including the video content and the advertisement information to the set top box (TV 2) and the tablet terminal via the network 92. The transmission server 91 may transmit the video content and the advertisement information to the respective display devices separately. Specifically, the transmission server 91 may transmit the video content to the set top box and transmit the advertisement information to the tablet terminal. The TV 2 may display the received video content while the tablet terminal may display the received advertisement information in association with the display of the video content on the TV 2 (in the case where the video content is displayed on the TV 2).

The systems, devices and apparatuses described herein may include one or more processors, which may be located in one place or distributed in a variety of places communicating via one or more networks. Such processor(s) can, for example, use conventional 3D graphics transformations, virtual camera and other techniques to provide appropriate images for display. By way of example and without limitation, the processors can be any of: a processor that is part of or is a separate component co-located with the stationary display and which communicates remotely (e.g., wirelessly) with the movable display; or a processor that is part of or is a separate component co-located with the movable display and communicates remotely (e.g., wirelessly) with the stationary display or associated equipment; or a distributed processing arrangement some of which is contained within the movable display housing and some of which is co-located with the stationary display, the distributed portions communicating together via a connection such as a wireless or wired network; or a processor(s) located remotely (e.g., in the cloud) from both the stationary and movable displays and communicating with each of them via one or more network connections; or any combination or variation of the above.

The processors can be implemented using one or more general-purpose processors, one or more specialized graphics processors, or combinations of these. These may be supplemented by specifically-designed ASICs (application specific integrated circuits) and/or logic circuitry. In the case of a distributed processor architecture or arrangement, appropriate data exchange and transmission protocols are used to provide low latency and maintain interactivity, as will be understood by those skilled in the art.

Similarly, program instructions, data and other information for implementing the systems and methods described herein may be stored on one or more on-board and/or removable memory devices. Multiple memory devices may be part of the same device or different devices, which are co-located or remotely located with respect to each other.

As described above, the example embodiment is usable for the purpose of presenting effectively, together with a video content, other information to be presented to the user and is usable as, for example, a system for providing a video content from the side of the server to the side of the terminal.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A video display system, comprising:
a transmission server (91), an information processing device (3), a first display device (2), and a portable second display device (7); wherein:
the transmission server transmits video information including at least a combination of a video content selected by a selection instruction from the information processing device and advertisement information to the information processing device via a network (101, S15);
the information processing device includes:
a video information reception unit for receiving the video information via the network (18); and
an output unit (15, 28) for outputting the video content included in the received video information to the first display device and wirelessly transmitting the advertisement information included in the video information to the second display device;
the first display device displays the video content input from the information processing device; and
the second display device displays the advertisement information received from the information processing device.

2. The video display system according to claim 1, wherein:
the second display device includes:
an operating unit (52, 53, 54) for accepting an operation performed by a user;
and
an operation data transmission unit (80) for transmitting operation data representing an operation performed on the operating unit to the information processing device; and
the information processing device further includes:
an operation data acquisition unit (10, S21) for acquiring the operation data;
and
a video control unit (10, S25, S27) for performing control regarding reproduction and/or display of the video content on the first display device based on the operation data.

3. The video display system according to claim 2, wherein in the case where the video content is displayed on the first display device, the second display device displays an operation image regarding an operation performed on the operating unit together with the advertisement information (51).

4. The video display system according to claim 2 or 3, wherein the operating unit includes a touch panel (52) provided on a screen of the second display device.

5. The video display system according to any one of claims 2 through 4, wherein the first display device receives a control signal, generated in accordance with an operation performed by the user on the second display device, from the second display device or from the information processing device, and operates in accordance with the control signal.

6. The video display system according to any one of claims 1 through 5, wherein:
the information processing device further includes:
a transmission information acquisition unit (10, S3) for acquiring transmission information representing an attribute of a user and/or a current state; and
an information transmission unit (10, S4) for transmitting the transmission information to the transmission server; and
the transmission server determines advertisement information to be transmitted to the information processing device, which is an addressee of the received transmission information, based on the transmission information (102, S14).

7. The video display system according to any one of claims 1 through 6, wherein:
the transmission server transmits the video information further including a reproduction control instruction regarding reproduction of the advertisement information; and
the information processing device further includes an advertisement control unit (10, S28) for controlling reproduction of the advertisement information by the second display device in accordance with the reproduction control instruction included in the video information.

8. The video display system according to claim 7, wherein the advertisement control unit performs control such that predetermined advertisement information having a shorter reproduction time duration than that of the video content to be reproduced by the first display device is reproduced in repetition.

9. The video display system according to claim 7, wherein the advertisement control unit controls the reproduction of the advertisement information by the second display device such that the predetermined advertisement information is reproduced by the second display device at a timing when a specific content of the video content reaches a predetermined state.

10. The video display system according to any one of claims 1 through 6, wherein the output unit wirelessly transmits the advertisement information to the second display device such that advertisement information having a content in accordance with a specific content of the video content to be reproduced by the first display device is reproduced by the second display device.

11. The video display system according to any one of claims 1 through 6, wherein:
the transmission server performs streaming transmission of the video content and the advertisement information including a moving image to the information processing device; and
the output unit outputs the video content received in succession by the video information reception unit to the first display device in succession, and transmits the advertisement information received in succession by the video information reception unit to the second display device in succession.

12. The video display system according to any one of claims 1 through 11, wherein the video content is a video of a TV program which is planned to be broadcast, which is being broadcast, or which has been broadcast.

13. A video display system, comprising:
a transmission server (91), a first display device (2), and a portable second display device (7); wherein:
the transmission server transmits video information including at least a combination of a video content selected by a selection instruction and advertisement information to the first display device and the second display device via a network;
the first display device displays the received video content; and
the second display device displays the received advertisement information in association with the display of the video content.

14. A video display system (1) communicable with a transmission server (91) via a network, wherein:
the transmission server transmits video information including at least a combination of a video content selected by a selection instruction from an information processing device and advertisement information to the information processing device via a network;
the video display system comprising:
a video information reception unit for receiving the video information via the network; and
an output unit for outputting the video content included in the received video information to a first display device and causing the video content to be displayed, and wirelessly transmitting the advertisement information included in the video information to a portable second display device and causing the advertisement information to be displayed.

15. A video display system, comprising:
a transmission server, an information processing device, a first display device, and a portable second display device; wherein:
the transmission server transmits video information including at least a combination of a video content selected by a selection instruction from the information processing device and related information related to the video content to the information processing device via a network;
the information processing device includes:
a video information reception unit for receiving the video information via the network; and
an output unit for outputting the video content included in the received video information to the first display device and wirelessly transmitting the related information included in the video information to the second display device;
the first display device displays the video content input from the information processing device; and
the second display device displays the related information received from the information processing device.

16. A server (91) communicable with an information processing system (1) including a first display device (2) and a portable second display device (7) via a network, the server comprising:
a video storage unit (103) for storing video contents;
an advertisement storage unit (104) for storing advertisement information;
a video selection unit (102, S13) for selecting, among the video contents stored on the video storage unit, a video content to be displayed on the first display device based on a selection instruction from the information processing system;
an advertisement selection unit (102, S14) for selecting, among the advertisement information stored on the advertisement storage unit, advertisement information to be displayed on the second display device in the case where the video content is displayed on the first display device,; and
a transmission unit (101) for transmitting video information including at least a combination of the selected video content and the selected advertisement information to the information processing system via the network.

17. An information processing device (3) communicable with a transmission server via a network, the information processing device comprising:
a video information reception unit (18) for receiving video information including at least a combination of a video content selected by a selection instruction from the information processing device and advertisement information from the transmission server via the network; and
an output unit (15, 28) for outputting the video content included in the received video information to a first display device and wirelessly transmitting the advertisement information included in the video information to a portable second display device.

18. An information processing program executable by a computer (10) of an information processing device (3) communicable with a transmission server via a network, the information processing program causing the computer to act as:
video information reception means (10, S22) for receiving video information including at least a combination of a video content selected by a selection instruction from the information processing device and advertisement information from the transmission server via the network; and
output means (10, S6, S7) for outputting the video content included in the received video information to a first display device and wirelessly transmitting the advertisement information included in the video information to a portable second display device.

19. A video display method executable by a video display system including a transmission server (91), an information processing device (3), a first display device (2), and a portable second display device (7); wherein:
the transmission server transmits video information including at least a combination of a video content selected by a selection instruction from the information processing device and advertisement information to the information processing device via a network (S15);
the information processing device:
receives the video information via the network (S22); and
outputs the video content included in the received video information to the first display device and wirelessly transmits the advertisement information included in the video information to the second display device (S6, S7);
the first display device displays the video content input from the information processing device; and
the second display device displays the advertisement information received from the information processing device.

20. A video display method executable by a video display system including a transmission server, a first display device, and a portable second display device; wherein:
the transmission server transmits video information including at least a combination of a video content selected by a selection instruction and advertisement information to the first display device and the second display device via a network;
the first display device displays the received video content; and
the second display device displays the received advertisement information in association with the display of the video content.

21. A video display method executable by a video display system communicable with a transmission server via a network, wherein:
the transmission server transmits video information including at least a combination of a video content selected by a selection instruction from an information processing device and advertisement information to the information processing device via a network;
the video display method comprising:
receiving the video information via the network; and
outputting the video content included in the received video information to a first display device and causing the video content to be displayed, and wirelessly transmitting the advertisement information included in the video information to a portable second display device and causing the advertisement information to be displayed.

22. A video display method executable by a video display system including a transmission server, an information processing device, a first display device, and a portable second display device; wherein:
the transmission server transmits video information including at least a combination of a video content selected by a selection instruction from the information processing device and related information related to the video content to the information processing device via a network;
the information processing device:
receives the video information via the network; and
outputs the video content included in the received video information to the first display device and wirelessly transmits the related information included in the video information to the second display device;
the first display device displays the video content input from the information processing device; and
the second display device displays the related information received from the information processing device.
